# EUROPÄISCHE PATENTSCHRIFT

(11) **EP 0 880 567 B1**
(45) Veröffentlichungstag und Bekanntmachung des Hinweises auf die Patenterteilung: **17.05.2000**
(21) Anmeldenummer: 97902321.5
(22) Anmeldetag: 04.02.1997
(51) Int. Cl.: C09K 9/02, G02F 1/15

(54) **ELEKTROCHROMES SYSTEM**
ELECTROCHROMIC SYSTEM
SYSTEME ELECTROCHROME

(30) Priorität: 15.02.1996 DE 19605448
(43) Veröffentlichungstag der Anmeldung: 02.12.1998
(73) Patentinhaber: BAYER AG, 51368 Leverkusen (DE)
(72) Erfinder: BERNETH, Horst, D-51373 Leverkusen (DE); CLAUSSEN, Uwe, D-51379 Leverkusen (DE)
(86) Internationale Anmeldenummer: EP9700499
(87) Internationale Veröffentlichungsnummer: WO9730135

(56) Entgegenhaltungen:
- PATENT ABSTRACTS OF JAPAN vol. 013, no. 554 (P-973), 11.Dezember 1989 & JP 01 230026 A (AGENCY OF IND SCIENCE & TECHNOL), 13.September 1989,
- PATENT ABSTRACTS OF JAPAN vol. 014, no. 343 (P-1082), 25.Juli 1990 & JP 02 120829 A (KONICA CORP), 8.Mai 1990,
- PATENT ABSTRACTS OF JAPAN vol. 003, no. 113 (E-139), 19.September 1979 & JP 54 091275 A (SEIKO INSTR & ELECTRONICS LTD), 19.Juli 1979,

## Beschreibung

Die vorliegende Erfindung betrifft ein elektrochromes System, eine elektrochrome Flüssigkeit enthaltend dieses elektrochrome System sowie eine elektrochrome Vorrichtung.

Elektrochrome Vorrichtungen, die ein elektrochromes System enthalten, sind bereits bekannt.

Solche Vorrichtungen enthalten als elektrochromes System üblicherweise Paare von Redoxsubstanzen, die in einem inerten Lösungsmittel gelöst sind. Zusätzlich können Leitsalze, Lichtstabilisatoren und Substanzen, die die Viskosität beeinflussen, enthalten sein.

Als Paar von Redoxsubstanzen wird je eine reduzierbare und eine oxidierbare Substanz verwendet. Beide sind farblos oder nur schwach gefärbt. Unter Einfluß einer elektrischen Spannung wird die eine Substanz reduziert, die andere oxidiert, wobei wenigstens eine farbig wird. Nach Abschalten der Spannung bilden sich die beiden ursprünglichen Redoxsubstanzen wieder zurück, wobei Entfärbung bzw. Farbaufhellung auftritt.

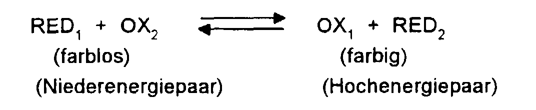

Aus US-4.902.108 ist bekannt, daß solche Paare von Redoxsubstanzen geeignet sind, bei denen die reduzierbare Substanz wenigstens zwei chemisch reversible Reduktionswellen im cyclischen Voltammogramm und die oxidierbare Substanz entsprechend wenigstens zwei chemisch reversible Oxidationswellen besitzt.

Elektrochrome Vorrichtungen können auf vielfältige Weise Anwendung finden. So können sie z.B. als Automobilrückspiegel ausgebildet sein, der bei Nachtfahrt durch Anlegen einer Spannung abgedunkelt werden kann und somit das Blenden durch Scheinwerfer fremder Fahrzeuge verhindert (vgl. z.B. US-3.280.701, US-4.902.108, EP-A-0.435.689). Weiterhin können solche Vorrichtungen auch in Fensterscheiben oder Autosonnendächern eingesetzt werden, wo sie nach Anlegen einer Spannung das Sonnenlicht abdunkeln. Letztlich kann mit solchen Vorrichtungen auch eine Matrixanzeige aufgebaut werden zur bildlichen Darstellung von Informationen wie Buchstaben, Zahlen und Zeichen.

Elektrochrome Vorrichtungen bestehen normalerweise aus einem Paar Glas- oder Kunststoffscheiben, von denen im Falle eines Autospiegels eine verspiegelt ist. Eine Seite dieser Scheiben ist mit einer lichtdurchlässigen, elektrisch leitfähigen Schicht, z.B. Indium-Zinn-Oxid (ITO), beschichtet. Aus diesen Scheiben wird nun eine Zelle aufgebaut, indem sie mit ihrer einander zugewandten elektrisch leitfähig beschichteten Seite mit einem ringförmigen oder rechteckigen Dichtungsring verbunden, vorzugsweise verklebt werden. Der Dichtungsring stellt einen gleichmäßigen Abstand zwischen den Scheiben her, beispielsweise 0,1 bis 0,5 mm. In diese Zelle wird nun über eine Öffnung eine elektrochrome Lösung eingefüllt und die Zelle dicht verschlossen. Über die ITO-Schicht lassen sich die beiden Scheiben getrennt kontaktieren.

Bei den aus dem Stand der Technik bekannten elektrochromen Systemen sind solche Paare von Redoxsubstanzen enthalten, die nach Reduktion bzw. Oxidation farbige Radikale, Kationradikale oder Anionradikale bilden, die chemisch reaktiv sind. Wie beispielsweise aus Topics in Current Chemistry, Vol. 92, S. 1-44 (1980) bekannt ist, können solche Radikal(ionen) empfindlich gegenüber Elektrophilen oder Nukleophilen oder auch Radikalen sein. Es muß deshalb zum Erreichen einer hohen Stabilität einer elektrochromen Vorrichtung, die ein solches elektrochromes System enthält, das mehrere tausend Schaltcyclen überstehen soll, dafür gesorgt werden, daß das verwendete Lösungsmittel absolut frei von Elektrophilen, z.B. Protonen, Nukleophilen und Sauerstoff ist. Weiterhin muß dafür gesorgt werden, daß sich solche reaktiven Spezies nicht durch elektrochemische Prozesse an den Elektroden während des Betriebs der elektrochromen Vorrichtung bilden.

Es bestand demnach ein Bedarf an einem elektrochromen System, das wenigstens eine elektrochrome Substanz enthält, die nach Reduktion oder Oxidation nicht in eine radikal(ion)ische Spezies übergeht, sondern in reduzierter oder oxidierter Form eine geschlossene Elektronenschale besitzt.

Gegenstand der vorliegenden Erfindung ist demnach ein elektrochromes System, enthaltend mindestens eine oxidierbare Substanz RED₁, die durch Elektronenabgabe an einer Anode und mindestens eine reduzierbare Substanz OX₂, die durch Elektronenaufnahme an einer Kathode, jeweils unter Zunahme der Extinktion im sichtbaren Bereich des Spektrums von einer schwach gefärbten oder farblosen Form in eine gefärbte Form OX₁ bzw. RED₂ übergeht, wobei nach Ladungsausgleich jeweils die schwach gefärbte bzw. farblose Form zurückgebildet wird, dadurch gekennzeichnet, daß bei mindestens einer der enthaltenen Substanzen RED₁ oder OX₂ die wechselseitige Umwandlung von oxidierter und reduzierter Form durch Bruch bzw. Bildung einer σ-Bindung erfolgt.

Vorzugsweise ist in dem erfindungsgemäßen elektrochromen System mindestens ein Paar reduzierbarer und oxidierbarer Substanzen RED₁/OX₂ enthalten.

Die Reduktions- und Oxidationsprozesse in dem erfindungsgemäßen elektrochromen System erfolgen im allgemeinen durch Elektronenaufnahme bzw. -abgabe an einer Kathode bzw. Anode, wobei zwischen den Elektroden vorzugsweise eine Potentialdifferenz von 0,3 bis 3 V herrscht. Nach Abschalten des elektrischen Potentials erfolgt im allgemeinen spontan ein Ladungsausgleich zwischen den Substanzen RED₂ und OX₁, wobei eine Entfärbung bzw. Farbaufhellung eintritt. Ein solcher Ladungsausgleich erfolgt auch bereits während des Stromflusses im Innern des Elektrolytvolumens.

Das erfindungsgemäße elektrochrome System enthält vorzugsweise als reduzierbare Substanz OX₂ eine cyclische organische Verbindung, die nach Aufnahme von 2 Elektronen unter Bruch einer der σ-Bindungen des Ringes in eine ringoffene Verbindung übergeht und die durch Abgabe von 2 Elektronen wieder in die cyclische Ausgangsverbindung übergeht, wobei insgesamt jeweils genau zwei Elektronen übertragen werden.

Die Ringöffnung kann beispielsweise so erfolgen, daß direkt zwei Elektronen aufgenommen werden, was zum Bindungsbruch führt. Es ist aber auch möglich, daß zunächst ein Elektron aufgenommen wird, worauf Ringöffnung erfolgt, der sich dann weitere Reaktionen wie die Aufnahme eines weiteren Elektrons und/oder eines Protons und/oder die Abspaltung einer anionischen Abgangsgruppe anschließen können, wobei insgesamt aber genau 2 Elektronen aufgenommen werden. Diese Ringöffnung führt zu einem veränderten π-Elektronensystem, das eine entsprechende längerwellige und/oder extinktionsstärkere Lichtabsorption aufweist. Der Ringschluß kann entsprechend durch gleichzeitige Abgabe von zwei Elektronen erfolgen, oder sukzessive durch Abgabe von zunächst einem Elektron und gegebenenfalls eines weiteren Elektrons und/oder das gegebenenfalls angelagerte Proton wird wieder abgespalten und/oder die abgespaltene anionische Abgangsgruppe wieder angelagert, wobei insgesamt aber genau 2 Elektronen abgegeben werden.

Bei der in dem erfindungsgemäßen elektrochromen System enthaltenen reduzierbaren Substanz OX₂, die reversibel unter Bruch einer Ring-σ-Bindung in die entsprechende ringoffene Substanz RED₂ übergeht handelt es sich insbesondere um eine Verbindung aus der Reihe der Tetrazoliumsalze, Benzo- oder Naphthotriazoliumsalze, Cyclopropane und [1.1.0]Bicyclobutane. Durch Elektronenaufnahme und Bindungsbruch werden daraus dann die entsprechenden gefärbten Verbindungen aus der Reihe der Formazane, Amino-azo-benzole, Amino-azo-naphthaline, 1,3-Dimethylenpropane und 1,3-Dimethylencyclobutane gebildet.

Bei den Tetrazoliumsalzen, Naphthotriazoliumsalzen, Cyclopropanen und [1.1.0]-Bicyclobutanen handelt es sich bevorzugt um solche Verbindungen der Formeln (I) bis (IV) 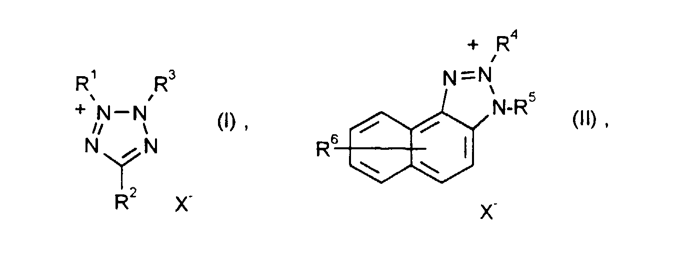 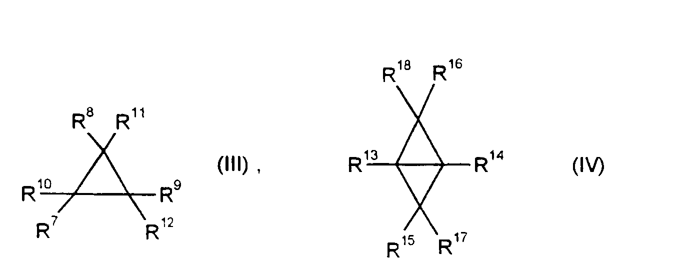 worin
- R¹ bis R⁵: unabhängig voneinander C₆- bis C₁₀-Aryl oder einen gegebenenfalls benzanellierten aromatischen oder quasiaromatischen fünf- oder sechsgliedrigen heterocyclischen Ring bedeuten,
- R⁷, R⁹, R¹³ und R¹⁴: unabhängig voneinander einen Rest der Formeln (V) bis (VII) 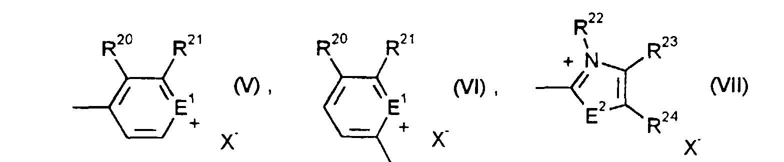 bedeuten,
- R⁸, R¹⁵ und R¹⁶: unabhängig voneinander C₆- bis C₁₀-Aryl, C₇-C₁₁-Aroyl oder einen Rest der Formeln (V) bis (VII) bedeuten,
- R¹⁰ bis R¹², R¹⁷ und R¹⁸: unabhängig voneinander Wasserstoff, C₁- bis C₄-Alkyl, Halogen oder Cyano bedeuten,
- E¹ und E²: unabhängig voneinander O, S oder N-R¹⁹ bedeuten,
- R¹⁹ und R²²: unabhängig voneinander C₁- bis C₁₈-Alkyl, C₂- bis C₈-Alkenyl, C₄-bis C₇-Cycloalkyl, C₇- bis C₁₅-Aralkyl oder C₆- bis C₁₀-Aryl bedeuten,
- R⁶, R²⁰, R²¹, R²³ und R²⁴: unabhängig voneinander Wasserstoff, C₁- bis C₄-Alkyl, C₁- bis C₄-Alkoxy, Halogen, Cyano, Nitro oder C₁- bis C₄-Alkoxycarbonyl bedeuten oder
- R²⁰ und R²¹ bzw. R²³ und R²⁴: gemeinsam eine -CH=CH-CH=CH-Brücke bilden, und
- X⁻: ein unter den Bedingungen redox-inertes, farbloses Anion bedeutet.

Bevorzugt sind solche Verbindungen der Formeln (I) bis (IV), worin
- R¹ bis R⁵: unabhängig voneinander für einen Rest der Formeln 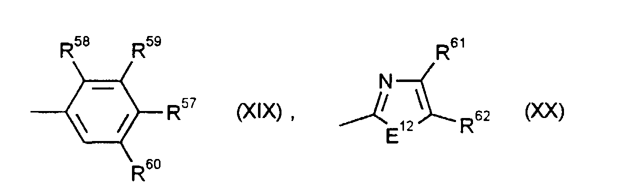 stehen, worin
- R⁵⁷ bis R⁶²: unabhängig voneinander Wasserstoff, C₁- bis C₆-Alkyl, C₁- bis C₆-Alkoxy, Hydroxy, Halogen, Cyano, Nitro, Di-(C₁- bis C₄-alkyl)amino, Tri-(C₁- bis C₄-alkyl)ammonium, C₁- bis C₆-Alkanoylamino, Benzoylamino, C₁- bis C₆-Alkyl-sulfonylamino, Benzolsulfonylamino, C₁- bis C₄-Alkoxycarbonyl oder COOH bedeuten oder
paarweise nebeneinander stehende Reste gemeinsam eine -O-(CH₂)₂₋₃-, -O-(CH₂)₁₋₂-O-, NR⁶³-(CH₂)₂₋₃- oder -NR⁶³-(CH₂)₁₋₂-O-Brücke bilden oder
- R⁵⁸ und R⁵⁹ und/oder R⁶¹ und R⁶²: eine -CH=CH-CH=CH-Brücke bilden, die durch Methyl, Methoxy oder Chlor substituiert sein kann,
- R⁶³: Wasserstoff oder C₁- bis C₄-Alkyl bedeutet,
- E¹²: O, S oder NR⁶⁴ bedeutet,
- R⁶⁴: Wasserstoff, C₁- bis C₁₈-Alkyl, C₂- bis C₁₂-Alkenyl, C₄- bis C₇-Cycloalkyl, C₇- bis C₁₅-Aralkyl oder C₆- bis C₁₀-Aryl bedeutet,
- R⁷, R⁹, R¹³ und R¹⁴: einen Rest der Formel (V) bedeuten und paarweise gleich sind,
- R⁸, R¹⁵ und R¹⁶: Phenyl oder einen Rest der Formel (V) bedeuten und R¹⁵ und R¹⁶ gleich sind,
- R⁶, R¹⁰ und R¹²: Wasserstoff bedeuten,
- R¹¹: Wasserstoff, Methyl, Cyano oder Chlor bedeutet,
- R¹⁷ und R¹⁸: Wasserstoff oder Methyl bedeuten und gleich sind,
- E¹: O oder NR¹⁹ bedeutet,
- R¹⁹: C₁- bis C₁₂-Alkyl, C₂- bis C₄-Alkenyl, Cyclohexyl, Benzyl oder Phenyl bedeutet,
- R²⁰ und R²¹: für Wasserstoff stehen oder gemeinsam eine -CH=CH-CH=CH-Brücke bilden,
und
- X⁻: ein unter den Bedingungen redox-inertes, farbloses Anion bedeutet.

Als oxidierbare Substanzen RED₁ sind in dem erfindungsgemäßen elektrochromen System vorzugsweise solche organischen Verbindungen enthalten, die zweistufig reversibel 2 Elektronen abgeben können, wobei insbesondere nach Abgabe eines Elektrons eine längerwellige und/oder intensivere Lichtabsorption erzielt wird.

Diese Substanzen RED₁ zeigen im cyclischen Voltammogramm, aufgenommen in einem inerten Lösungsmittel, mindestens 2, in der Regel genau 2 elektrochemisch und chemisch reversible Oxidationsstufen, die jeweils von der Abgabe eines Elektrons herrühren. Solche Substanzen sind beispielsweise aus Topics in Current Chemistry, Vol. 92, S. 1-44 (1980) bekannt und werden auch in US-4 902 108, wie bereits oben zitiert, in einer elektrochromen Vorrichtung eingesetzt.

Unter solchen 2-stufig reversibel oxidierbaren Substanzen sind solche bevorzugt, die eine Differenz ihrer beiden Oxidationsstufen von mindestens 250 mV aufweisen.

Unter zweistufig reversibel oxidierbaren Substanzen RED₁ sind vorzugsweise solche Verbindungen zu verstehen, die einer der Formeln (VIII) bis (XVIII) 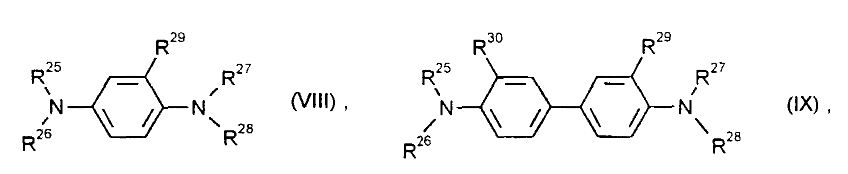 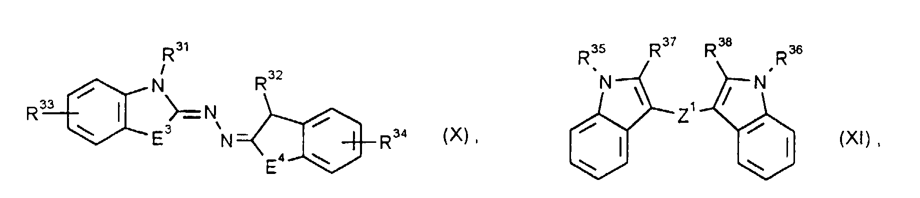 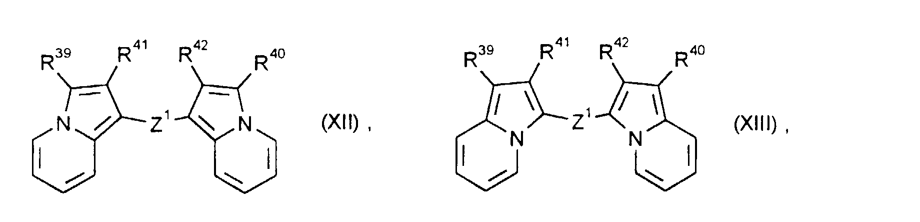 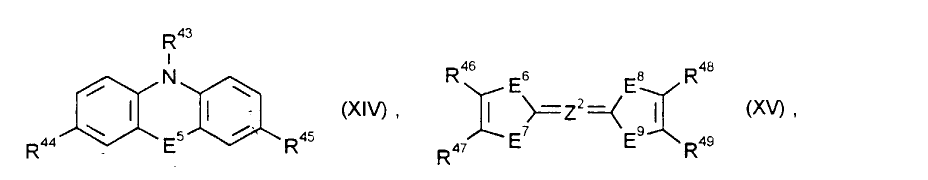 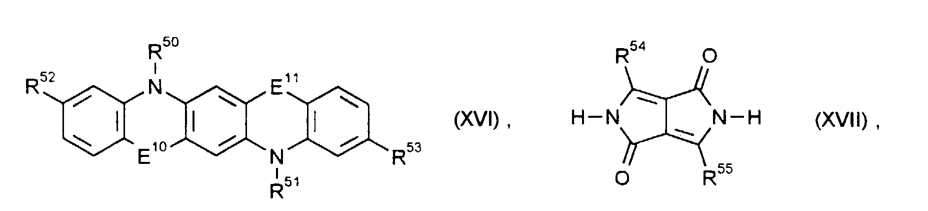 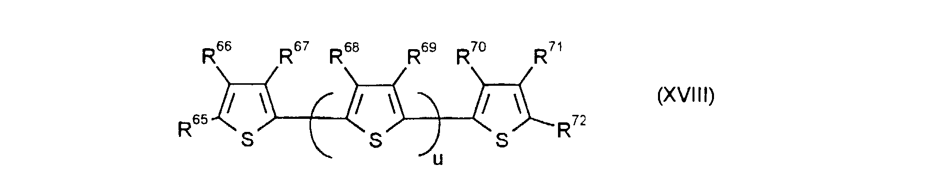 entsprechen, worin
- R²⁵ bis R²⁸, R³¹, R³², R³⁵, R³⁶, R⁴³, R⁵⁰ und R⁵¹: unabhängig voneinander C₁- bis C₁₈-Alkyl, C₂- bis C₁₂-Alkenyl, C₄- bis C₇-Cycloalkyl, C₇- bis C₁₅-Aralkyl oder C₆- bis C₁₀-Aryl bedeuten, und R⁴³, R⁵⁰ und R⁵¹ zusätzlich Wasserstoff bedeuten können,
- R²⁹, R³⁰, R³³, R³⁴, R³⁷, R³⁸, R³⁹ bis R⁴², R⁴⁴, R⁴⁵, R⁴⁶ bis R⁴⁹ und R⁵² bis R⁵⁵: unabhängig voneinander Wasserstoff, C₁- bis C₄-Alkyl, C₁- bis C₄-Alkoxy, Halogen, Cyano, Nitro, C₁- bis C₄-Alkoxycarbonyl oder C₆- bis C₁₀-Aryl bedeuten und R⁵⁴ und R⁵⁵ zusätzlich einen gegebenenfalls benzanellierten aromatischen oder quasiaromatischen fünf- oder sechsgliedrigen heterocyclischen Ring oder einen Rest der Formeln (V) oder (VI) bedeuten können, und R⁴⁵ zusätzlich NR⁷³R⁷⁴ bedeuten kann, oder
- R⁴⁶ und R⁴⁷ und/oder R⁴⁸ und R⁴⁹: eine -(CH₂)₃-, -(CH₂)₄-, -(CH₂)₅- oder -CH=CH-CH=CH-Brücke bilden,
- Z¹: eine direkte Bindung, eine -CH=CH- oder -N=N-Brücke bedeutet,
- =Z²=: eine direkte Doppelbindung, eine =CH-CH= oder =N-N=Brücke bedeutet,
- E³ bis E⁵, E¹⁰ und E¹¹: unabhängig voneinander O, S, NR⁵⁶ oder C(CH₃)₂ bedeuten und E⁵ zusätzlich C = O oder SO₂ bedeuten kann, oder
- E³ und R⁴: unabhängig voneinander zusätzlich -CH=CH- bedeuten,
- E⁶ bis E⁹: unabhängig voneinander S, Se oder NR⁵⁶ bedeuten,
- R⁵⁶, R⁷³ und R⁷⁴: unabhängig voneinander C₁- bis C₁₂-Alkyl, C₂- bis C₈-Alkenyl, C₄- bis C₇-Cycloalkyl, C₇- bis C₁₅-Aralkyl oder C₆- bis C₁₀-Aryl bedeuten, und R⁷³ zusätzlich Wasserstoff bedeuten kann oder NR⁷³R⁷⁴ einen fünf- oder sechsgliedrigen gesättigten Ring bedeutet, der weitere Heteroatome enthalten kann,
- R⁶⁵ bis R⁷²: unabhängig voneinander Wasserstoff, C₁- bis C₆-Alkyl, C₁- bis C₄-Alkoxy, Cyano, C₁- bis C₄-Alkoxycarbonyl oder C₆- bis C₁₀-Aryl bedeuten und
- R⁶⁵ und R⁶⁶ sowie R⁷¹ und R⁷²: unabhängig voneinander zusätzlich eine -(CH₂)₃-, -(CH₂)₄- oder -CH=CH-CH=CH-Brücke bilden können und
- u: eine ganze Zahl zwischen 0 und 10 bedeutet.

Bevorzugt sind Verbindungen der Formeln (VIII) bis (XVIII), worin
- R²⁵ bis R²⁸, R³¹, R³², R³⁵, R³⁶, R⁴³, R⁵⁰ und R⁵¹: unabhängig voneinander C₁- bis C₁₂-Alkyl, C₂- bis C₈-Alkenyl, Cyclohexyl, Benzyl oder Phenyl bedeuten, und R⁴³, R⁵⁰ und R⁵¹ zusätzlich Wasserstoff bedeuten können,
- R²⁹, R³⁰, R³³, R³⁴, R³⁷, R³⁸, R³⁹ bis R⁴², R⁴⁴, R⁴⁵, R⁴⁶ bis R⁴⁹ und R⁵² bis R⁵⁵: unabhängig voneinander Wasserstoff, Methyl, Ethyl, Methoxy, Ethoxy, Fluor, Chlor, Brom, Cyano, Nitro, Methoxycarbonyl, Ethoxycarbonyl oder Phenyl bedeuten und R⁵⁴ und R⁵⁵ zusätzlich 2- oder 4-Pyridyl oder einen Rest der Formeln (V) oder (VI) bedeuten können und R⁴⁵ zusätzlich NR⁷³R⁷⁴ bedeuten kann, oder
- R⁴⁶ und R⁴⁷ und/oder R⁴⁸ und R⁴⁹: eine -(CH₂)₃-, -(CH₂)₄-, -(CH₂)₅- oder -CH=CH-CH=CH-Brücke bilden,
- Z¹: eine direkte Bindung, eine -CH=CH- oder -N=N-Brücke bedeutet,
- =Z²=: eine direkte Doppelbindung, eine =CH-CH= oder =N-N=Brücke bedeutet,
- E³ bis E⁵, E¹⁰ und E¹¹: unabhängig voneinander O, S oder NR⁵⁶ bedeuten, und E⁵ zusätzlich C = O bedeuten kann,
- E⁶ bis E⁹: unabhängig voneinander S oder Se bedeuten,
- R⁵⁶, R⁷³ und R⁷⁴: unabhängig voneinander C₁- bis C₈-Alkyl, C₂- bis C₄-Alkenyl, Cyclohexyl, Benzyl oder Phenyl bedeutet, und R⁷³ zusätzlich Wasserstoff bedeuten kann oder NR⁷³R⁷⁴ Pyrrolidino, Piperidino oder Morpholino bedeutet,
- R⁶⁵, R⁶⁶, R⁷¹ und R⁷²: unabhängig voneinander Wasserstoff, C₁- bis C₄-Alkyl, Methoxycarbonyl, Ethoxycarbonyl oder Phenyl bedeuten oder paarweise eine -(CH₂)₃- oder -(CH₂)₄-Brücke bilden,
- R⁶⁷ bis R⁷⁰: Wasserstoff bedeuten und
- u: eine ganze Zahl von 1 bis 6 bedeutet.

Das erfindungsgemäße elektrochrome System enthält vorzugsweise mindestens ein Paar oxidierbarer und reduzierbarer Substanzen RED₁/OX₂, wobei als Substanzen OX₂ vorzugsweise solche der Formeln (I) bis (IV) in ihren allgemeinen und bevorzugten Bedeutungen, und als Substanzen RED₁ vorzugsweise solche der Formeln (VIII) bis (XVIII) in ihren allgemeinen und bevorzugten Bedeutungen in Frage kommen.

Insbesondere bevorzugt ist ein elektrochromes System, welches ein Paar RED₁/OX₂ enthält, wobei die Substanz OX₂ ein Tetrazoliniumsalz der Formel (I) und die Substanz RED₁ eine Verbindung ausgewählt aus der Reihe der Formeln (VIII), (X), (XI), (XIV) und (XV) darstellt, worin
- R¹ und R²: einem Rest der Formel (XIX) entsprechen,
- R³: einem Rest der Formel (XX) entspricht,
- R⁵⁷, R⁵⁹ und R⁶⁰: unabhängig voneinander Wasserstoff, Methyl, Ethyl, Methoxy, Ethoxy, Cyano, Nitro, -N⁺(CH₃)₃ oder COOH bedeuten oder
- R⁵⁷ und R⁵⁹: gemeinsam eine -O-CH₂-O-Brücke bilden,
- R⁵⁸: Wasserstoff, Methyl, Methoxy oder Chlor bedeutet,
- R⁶¹: Methyl, Difluormethyl, Trifluormethyl, Methoxycarbonyl, Ethoxycarbonyl oder Phenyl bedeutet,
- R⁶²: Wasserstoff, Methyl, Ethyl, Phenyl oder Chlor bedeutet oder
- R⁶¹ und R⁶²: zusammen eine -CH=CH-CH=CH- oder -CH=CH-C(OCH₃)=CH-Brücke bilden,
- E¹²: S bedeutet,
- X⁻: ein unter den Bedingungen redox-inertes, farbloses Anion bedeutet,
- R²⁵ bis R²⁸, R³¹, R³², R³⁵, R³⁶, R⁴³ und R⁵⁶: Methyl, Ethyl, Propyl, Butyl, Pentyl, Hexyl oder Benzyl bedeuten, wobei jeweils R²⁵ bis R²⁸, R³¹ und R³², sowie R³⁵ und R³⁶ gleich sind, und R⁴³ zusätzlich Wasserstoff bedeuten kann,
- R²⁹ und R⁴⁴: Wasserstoff bedeuten, R⁴⁵ Wasserstoff, Methoxy, Ethoxy, Dimethylamino, Diethylamino, Anilino, N-Methylanilino oder Piperidino bedeutet,
- R³³ und R³⁴: gleich sind und Wasserstoff, Methyl, Methoxy, Chlor, Cyano oder Methoxycarbonyl bedeuten,
- E³ bis E⁵ O, S oder NR⁵⁶: bedeuten, E³ und E⁴ aber gleich sind,
- R³⁷ und R³⁸: gleich sind und Wasserstoff, Methyl, Ethyl, Propyl, Butyl oder Phenyl bedeuten,
- Z¹: eine direkte Bindung oder -CH=CH- bedeutet,
- R⁴⁶ bis R⁴⁹: gleich sind und Wasserstoff, Methyl, Methoxy, Chlor, Cyano, Methoxycarbonyl, Ethoxycarbonyl oder Phenyl bedeuten,
- E⁶ bis E⁹: gleich sind und S, Se oder NR⁵⁶ bedeuten,
- =Z²=: eine direkte Doppelbindung, eine =CH-CH= oder =N-N=Brücke bedeutet,
- R⁶⁵ und R⁶⁶ sowie R⁷¹ und R⁷²: eine -(CH₂)₃- oder -(CH₂)₄-Brücke bedeuten,
- R⁶⁷ bis R⁷⁰: Wasserstoff bedeuten und
- u: eine ganze Zahl von 1 bis 6 bedeutet.

In einer besonderen Ausgestaltungsform enthält das erfindungsgemäße elektrochrome System ein Paar von oxidierbaren und reduzierbaren Substanzen RED₁/OX₂, wobei RED₁ und OX₂ über eine Brücke B miteinander verknüpft sind, wobei
- B: für eine Brücke der Formeln -(CH₂)ₙ- oder -[Y¹ₛ-(CH₂)ₘ-Y²]ₒ-(CH₂)ₚ-Y³_{q}- steht, die durch C₁- bis C₄-Alkyl, C₁- bis C₄-Alkoxy, Halogen oder Phenyl substituiert sein kann,
- Y¹ bis Y³: unabhängig voneinander für O, S, NR⁶³, COO, CONH, NHCONH, Cyclopentandiyl, Cyclohexandiyl, Phenylen oder Naphthylen stehen,
- R⁶³: C₁- bis C₆-Alkyl, C₂- bis C₆-Alkenyl, C₄- bis C₇-Cycloalkyl, C₇- bis C₁₅-Aralkyl oder C₆- bis C₁₀-Aryl bedeutet,
- n: eine ganze Zahl von 1 bis 12 bedeutet,
- m und p: unabhängig voneinander eine ganze Zahl von 0 bis 8 bedeuten,
- o: eine ganze Zahl von 0 bis 6 bedeutet,
- q und s: unabhängig voneinander 0 oder 1 bedeuten,
und OX₂ vorzugsweise eine Verbindung der Formeln (I) bis (IV) darstellt mit der für diese Formeln angegebenen allgemeinen und bevorzugten Substituentenbedeutungen und RED₁ vorzugsweise eine Verbindung der Formeln (VIII) bis (XVIII) darstellt mit der für diese Formeln angegebenen allgemeinen und bevorzugten Substituentenbedeutungen, wobei die Verknüpfung mit der Brücke B über die Reste
R¹⁹, R²¹ bis R²⁵, R³¹, R³⁵, R³⁹, R⁴¹, R⁴³, R⁴⁶, R⁵⁰, R⁵⁴, R⁵⁶, R⁵⁷, R⁵⁹, R⁶¹, R⁶², R⁶⁴, R⁶⁵ oder R⁶⁶ erfolgt, die in diesem Fall eine direkte Bindung zur Brücke B darstellen, oder R⁴⁶, R⁵⁷ oder R⁵⁹ eine -COO-Brücke zur Brücke B bilden.

In den obengenannten Substituentenbedeutungen sind Alkylreste, auch abgewandelte, wie z.B. Alkoxy- oder Aralkylreste, vorzugsweise solche mit 1 bis 12 C-Atomen, insbesondere mit 1 bis 8 C-Atomen, sofern nichts anderes angegeben ist. Sie können geradkettig oder verzweigt sein und gegebenenfalls weitere Substituenten tragen wie z.B. C₁- bis C₄-Alkoxy, Fluor, Chlor, Hydroxy, Cyano, C₁-bis C₄-Alkoxycarbonyl oder COOH.

Unter Cycloalkylresten werden vorzugsweise solche mit 3 bis 7 C-Atomen, insbesondere 5 oder 6 C-Atomen verstanden.

Alkenylreste sind vorzugsweise solche mit 2 bis 8 C-Atomen, insbesondere 2 bis 4 C-Atomen.

Arylreste, auch solche in Aralkyl- oder Aroylresten, sind vorzugsweise Phenyl- oder Naphthylreste, insbesondere Phenylreste. Sie können durch 1 bis 3 der folgenden Reste substituiert sein: C₁- bis C₆-Alkyl, C₁- bis C₆-Alkoxy, Fluor, Chlor, Brom, Cyano, Hydroxy, C₁- bis C₆-Alkoxycarbonyl oder Nitro; zwei benachbarte Reste können auch einen Ring bilden.

Unter gegebenenfalls benzanellierten aromatischen oder quasiaromatischen fünf- oder sechsgliedrigen heterocyclischen Ringen werden insbesondere Imidazol, Benzimidazol, Oxazol, Benzoxazol, Thiazol, Benzthiazol, Indol, Pyrazol, Triazol, Thiophen, Isothiazol, Benzisothiazol, 1,3,4- oder 1,2,4-Thiadiazol, Pyridin, Chinolin, Pyrimidin und Pyrazin verstanden. Sie können durch 1 bis 3 der folgenden Reste substituiert sein: C₁- bis C₆-Alkyl, C₁- bis C₆-Alkoxy, Fluor, Chlor, Brom, Cyano, Nitro, Hydroxy, Mono- oder Di-(C₁- bis C₆-alkyl)amino, C₁- bis C₆-Alkoxycarbonyl, C₁- bis C₆-Alkylsulfonyl, C₁- bis C₆-Alkanoylamino, Phenyl oder Naphthyl. Zwei benachbarte Reste können auch einen Ring bilden.

Tetrazoliumsalze der Formel (I) sind beispielsweise aus Houben-Weyl, Methoden der organischen Chemie, Band 10/3, S. 685 (1965), EP-A 476.455, EP-A 476.456, EP-A 476 457 bekannt, Naphthotriazoliumsalze der Formel (II) sind beispielsweise aus DE-OS 4 007 058 bekannt, Cyclopropane der Formel (III) sind beispielsweise aus J. Org. Chem. 57, 1849 (1992) bekannt, [1,1.0]-Bicyclobutane sind beispielsweise aus J. Am. Chem. Soc. 99, 6120, 6122 (1977) bekannt oder lassen sich analog dazu herstellen.

Die reversibel oxidierbaren Substanzen RED₁ der Formeln (VIII) bis (XVIII) sind beispielsweise aus Topics in Current Chemistry, Vol. 92, S. 1-44 (1980), Angew. Chem. 90, 927 (1978), J. Am. Chem. Soc. 117, 8528 (1995), J.C.S. Perkin II, 1990, 1777 und DE-OS 4.435.211 oder aus der dort zitierten Literatur bekannt oder lassen sich analog herstellen.

Das erfindungsgemäße elektrochrome System enthält vorzugsweise mindestens ein Lösungsmittel, wodurch eine elektrochrome Flüssigkeit entsteht, die ebenfalls Gegenstand der vorliegenden Erfindung ist.

Geeignete Lösungsmittel sind alle unter den gewählten Spannungen redox-inerten Lösungsmittel, die keine Elektrophile oder Nukleophile abspalten können oder selber als ausreichend starke Elektrophile oder Nukleophile reagieren und so mit den farbigen Radikalionen reagieren könnten. Beispiele sind Propylencarbonat, γ-Butyrolacton, Acetonitril, Propionitril, Glutaronitril, Methylglutarnitril, 3,3'-Oxydipropionitril, Hydroxypropionitril, Dimethylformamid, N-Methylpyrrolidon, Sulfolan, 3-Methylsulfolan oder Mischungen davon. Bevorzugt sind Propylencarbonat und Mischungen davon mit Glutaronitril oder 3-Methylsulfolan.

Die erfindungsgemäße elektrochrome Flüssigkeit kann mindestens ein inertes Leitsalz enthalten.

Als inerte Leitsalze sind Lithium-, Natrium- und Tetraalkylammoniumsalze geeignet, insbesondere letztere. Die Alkylgruppen können zwischen 1 und 18 C-Atome aufweisen und gleich oder verschieden sein. Bevorzugt ist Tetrabutylammonium. Als Anionen zu diesen Salzen, aber auch als Anionen X⁻ in den Formeln (I), (II), (IV), (VI), (VII) kommen alle redox-inerten, farblosen Anionen in Frage. Beispiele sind Tetrafluoroborat, Perchlorat, Methansulfonat, Trifluormethansulfonat, Perfluorbutansulfonat, Benzolsulfonat, Hexafluorophosphat, Hexafluoroarsenat und Hexafluorosilikat. Im letzteren Falle steht X⁻ für 1/2 SiF₆²⁻.

Die Leitsalze werden beispielsweise im Bereich 0 bis 1 molar eingesetzt.

Als weitere Zusätze zu der elektrochromen Flüssigkeit können Verdicker eingesetzt werden, um die Viskosität der Flüssigkeit zu steuern. Das kann Bedeutung haben zur Vermeidung von Segretation, d.h. der Bildung von streifiger oder fleckiger Farbbildung bei längerem Betrieb einer die erfindungsgemäße elektrochrome Flüssigkeit enthaltenden elektrochromen Vorrichtung im eingeschalteten Zustand, und zur Steuerung der Ausbleichgeschwindigkeit nach Abschalten des Stroms.

Als Verdicker eignen sich alle für diese Zwecke üblichen Verbindungen wie z.B. Polyacrylat, Polymethacrylat (Luctile L®), Polycarbonat und Polyurethan.

Die elektrochrome Flüssigkeit kann auch gelförmig sein.

Als weitere Zusätze für die elektrochrome Flüssigkeit kommen UV-Absorber zur Verbesserung der Lichtechtheit in Frage. Beispiele sind UVINUL® 3000 (2,4-Dihydroxybenzophenon, BASF), SANDUVOR® 3035 (2-Hydroxy-4-n-octyloxy-benzophenon, Clariant), Tinuvin® 571 (2-(2H-Benzotriazol-2-yl)-6-dodecyl-4-methylphenol, Ciba), Cyasorb 24™ (2,2'-Dihydroxy-4-methoxybenzophenon, American Cyanamid Company), UVINUL® 3035 (Ethyl-2-cyano-3,3-diphenylacrylat, BASF), UVINUL® 3039 (2-Ethyl-hexyl-2-cyano-3,3-diphenylacrylat, BASF), UVINUL® 3088 (2-Ethylhexyl-p-methoxycinnamat, BASF).

Die UV-Absorber werden im Bereich 0,01 bis 2 mol/l, vorzugsweise 0,04 bis 1 mol/l eingesetzt.

Die elektrochrome Flüssigkeit enthält die elektrochromen Substanzen OX₂ und RED₁, insbesondere die der Formeln (I) bis (IV) und (VIII) bis (XVIII) jeweils in einer Konzentration von mindestens 10⁻⁴ mol/l, vorzugsweise 0,001 bis 0,5 mol/l. Die Gesamtkonzentration aller enthaltenen elektrochromen Substanzen liegt vorzugsweise unter 1 mol/l.

RED₁ und OX₂ werden im Verhältnis 1:3 bis 3:1, vorzugsweise 1:1 bis 1:2 eingesetzt.

Die erfindungsgemäßen elektrochromen Flüssigkeiten sind bestens als Bestandteil einer elektrochromen Vorrichtung geeignet. Weiterer Gegenstand der vorliegenden Erfindung sind demnach elektrochrome Vorrichtungen enthaltend eine erfindungsgemäße elektrochrome Flüssigkeit. Der Aufbau einer elektrochromen Vorrichtung, die z.B. als Fensterscheibe, Autosonnendach, Automobil-Rückspiegel oder Display ausgebildet sein kann, ist im Prinzip bekannt. Die erfindungsgemäße elektrochrome Vorrichtung besteht aus zwei einander zugewandten, lichtdurchlässigen Glas- oder Kunststoffscheiben, von denen gegebenenfalls eine verspiegelt ist und deren einander zugewandten Seiten elektrisch leitfähig beschichtet sind, z.B. mit Indium-Zinn-Oxid (ITO), zwischen denen sich die erfindungsgemäße elektrochrome Flüssigkeit befindet. Andere leitfähige Materialien sind ebenfalls geeignet: Zinnoxid, Antimon- oder Fluor-dotiertes Zinnoxid, Antimon- oder Aluminiumdotiertes Zinkoxid. Auch leitfähige organische Polymere wie gegebenenfalls substituierte Polythienyle, Polypyrrole, Polyaniline, Polyacetylen sind geeignet. Im Falle, daß eine der Scheiben verspiegelt ist, kann auch diese als leitfähige Schicht genutzt werden. Der Abstand der beiden Scheiben beträgt im allgemeinen 0,005-2 mm, vorzugsweise 0,2-0,5 mm. Der gewünschte Abstand zwischen den Scheiben wird im allgemeinen durch einen Dichtungsring hergestellt.

Das erfindungsgemäße elektrochrome System kann zusätzlich zu den oben beschriebenen Substanzen RED₁, OX₂ auch andere enthalten, wie sie beispielsweise in US-4.902.108, Topics in Current Chemistry, Vol. 92, S. 1-44 (1980) und Angew. Chem. 90, 927 (1978) beschrieben sind. Insbesondere sind solche gemeint, die durch Reduktion reversibel in eine gefärbte Form übergehen können. Solche elektrochromen Substanzen stammen beispielsweise aus den Gruppen der Viologene und der damit verwandten Redoxsysteme, die quaternierte quasiaromatische Fünfringe als Endsysteme haben, p-Diaminobenzole und Diaminobiphenyle, Chinone, Chinonimine und Chinodimethane. Eine Zumischung solcher Redoxsysteme kann beispielsweise vorteilhaft sein, um bei der erfindungsgemäßen elektrochromen Vorrichtung den Farbton z.B. des Displays im eingeschalteten Zustand zu korrigieren.

### Beispiele

### Beispiel 1

Es wurde eine Display-Zelle aus zwei mit Indium-Zinn-Oxid (ITO) beschichteten Glasplatten und einem Dichtungsring gebaut, wie sie in US-4.902.108 in den Beispielen 1 bis 3 beschrieben ist. Sie wurde über eine Öffnung in dem Dichtungsring befüllt mit einer Lösung von Tetrazoliumsalz (0,025 molar) der Formel 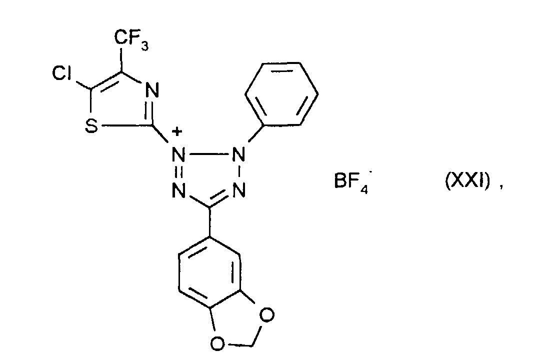 Tetrathiafulvalen (0,025 molar) der Formel 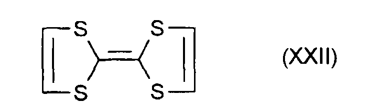 und Tetrabutylammoniumtetrafluoroborat (0,5 molar) in wasserfreiem Propylencarbonat. Die Farbe der Lösung in der Zelle war blaßgelb. Nach Anlegen einer Spannung von 1,5 V färbte sich die Lösung rasch tiefrot, nach Abschalten der Stromzufuhr entfärbte sich der Zellinhalt innerhalb von ca. 30 s wieder und resultierte in dem ursprünglichen Blaßgelb. Mehr als 100 solcher Schaltcyclen wurden ohne irgendwelche Veränderungen überstanden.

Wenn die eine Glasscheibe gegenüber ihrer ITO-beschichteten Seite versilbert war, erhielt man einen verdunkelbaren Spiegel.

### Beispiel 2

Es wurde eine Display-Zelle wie in Beispiel 1 gebaut. Sie wurde mit einer Lösung von Tetrazoliumsalz (0,025 molar) der Formel (XXI), (siehe Beispiel 1), N-Methylphenothiazin (0,025 molar) der Formel 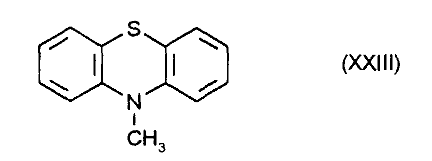 und Tetrabutylammoniumtetrafluoroborat (0,5 molar) in wasserfreiem Propylencarbonat befüllt. Die Farbe der Lösung in der Zelle war blaßgelb. Nach Anlegen einer Spannung von 1,5 V färbte sich die Lösung rasch tief blaustichigrot, nach Abschalten der Stromzufuhr entfärbte sich der Zellinhalt innerhalb von ca. 30 s wieder und resultierte in dem ursprünglichen Blaßgelb. Mehr als 100 solcher Schaltcyclen wurden ohne irgendwelche Veränderungen überstanden.

### Beispiel 3

Es wurde eine Display-Zelle wie in Beispiel 1 gebaut. Jedoch wurde vorher wie in US-4.902.108, Beispiel 10, beschrieben eine der Glasplatten auf der mit ITO beschichteten Seite mit einer Lösung eines Polyacrylats beschichtet und das Lösungsmittel abgedampft. Die Zelle wurde dann mit einer Lösung von Tetrazoliumsalz (0,017 molar) der Formel 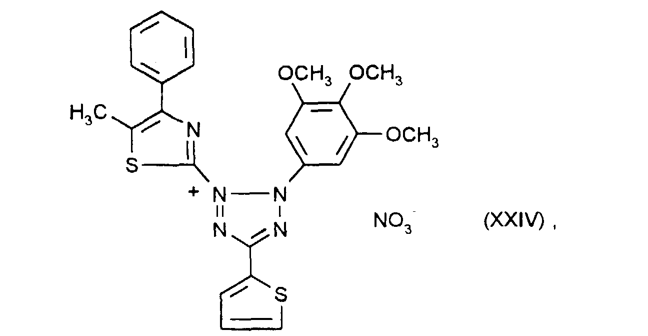 N-Butylphenothiazin (0,033 molar) der Formel 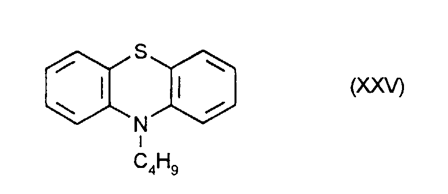 und Tetrabutylammoniumtetrafluoroborat (0,5 molar) in einer 4:2-Mischung aus wasserfreiem Propylencarbonat und wasserfreiem Glutaronitril über eine Öffnung im Dichtungsring befüllt. Die durch das Polyacrylat verdickte Lösung war leicht grünstichig gelb. Nach Anlegen einer Spannung von 1,5 V färbte sie sich rasch rotbraun. Nach Abschalten der Spannung entfärbte sich die Lösung wieder. Durch Kurzschließen der Zelle wurde die Entfärbung beschleunigt. Mehr als 100 Schaltcyclen wurden ohne irgendwelche Veränderungen überstanden.

### Beispiel 4

Es wurde eine Display-Zelle wie in Beispiel 1 gebaut. Sie wurde mit einer Lösung von Tetrazoliumsalz (0,025 molar) der Formel 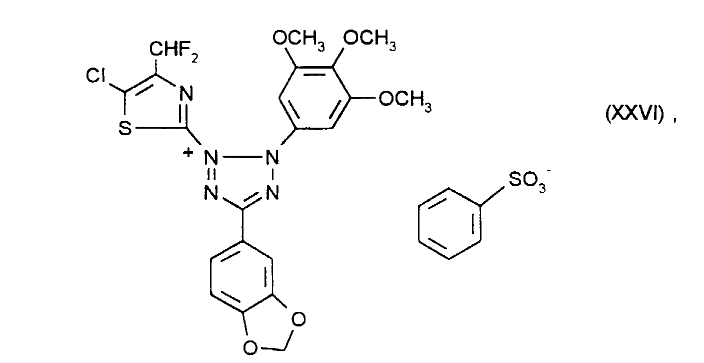 N-Methylphenothiazin (0,025 molar) der Formel (XXIII) (s. Beispiel 2) und Tetrabutylammoniumtetrafluoroborat (0,5 molar) in wasserfreiem Propylencarbonat befüllt. Die Farbe der Lösung in der Zelle war blaßgelb. Nach Anlegen einer Spannung von 1,5 V färbte sich die Lösung rasch tief rot, nach Abschalten der Stromzufuhr entfärbte sich der Zellinhalt innerhalb von ca. 30 s wieder und resultierte in dem ursprünglichen Blaßgelb. Mehr als 100 solcher Schaltcyclen wurden ohne irgendwelche Veränderungen überstanden. Nach 1 h Dauerbetrieb im eingeschalteten Zustand arbeitete das Display unverändert.

Ganz analog wurden unter Verwendung der in der Tabelle aufgeführten folgenden elektrochromen Substanzen elektrochrome Display-Zellen aufgebaut, wobei ähnlich gute Ergebnisse erzielt wurden.

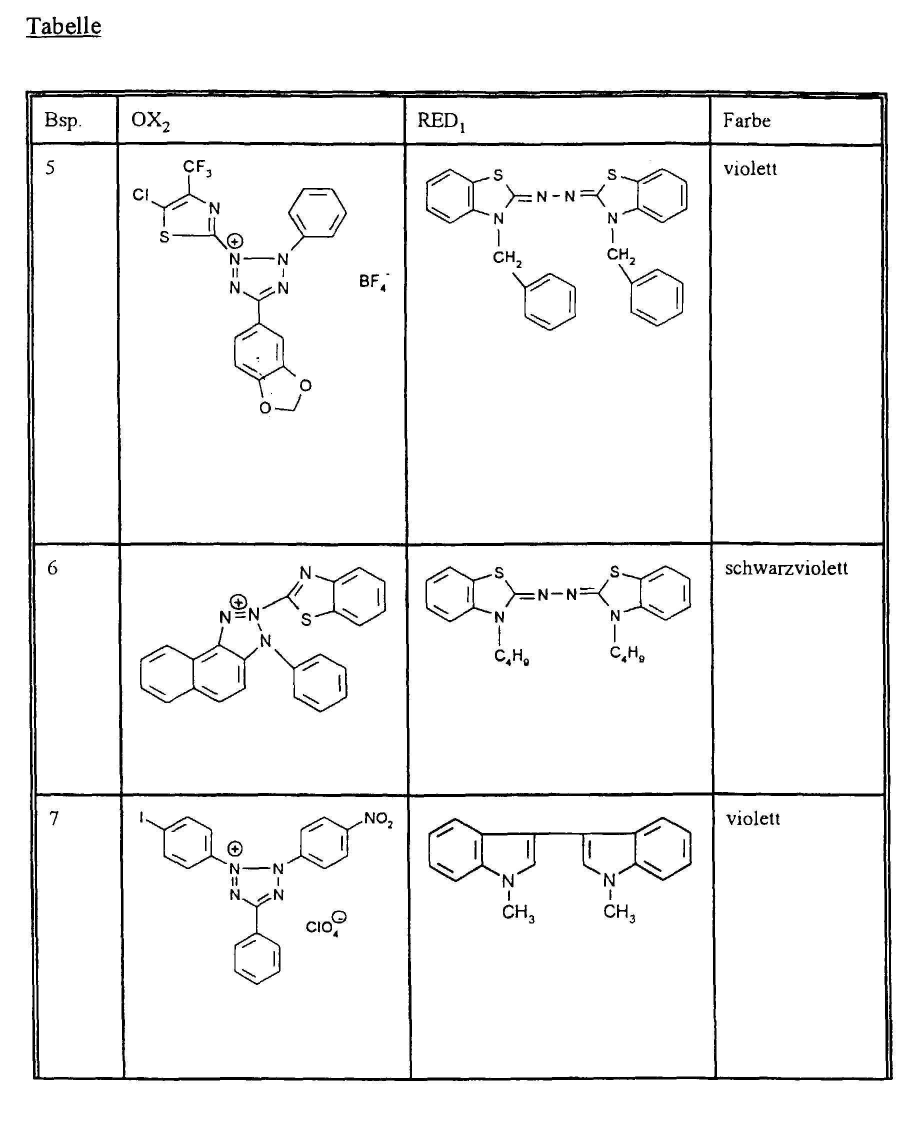

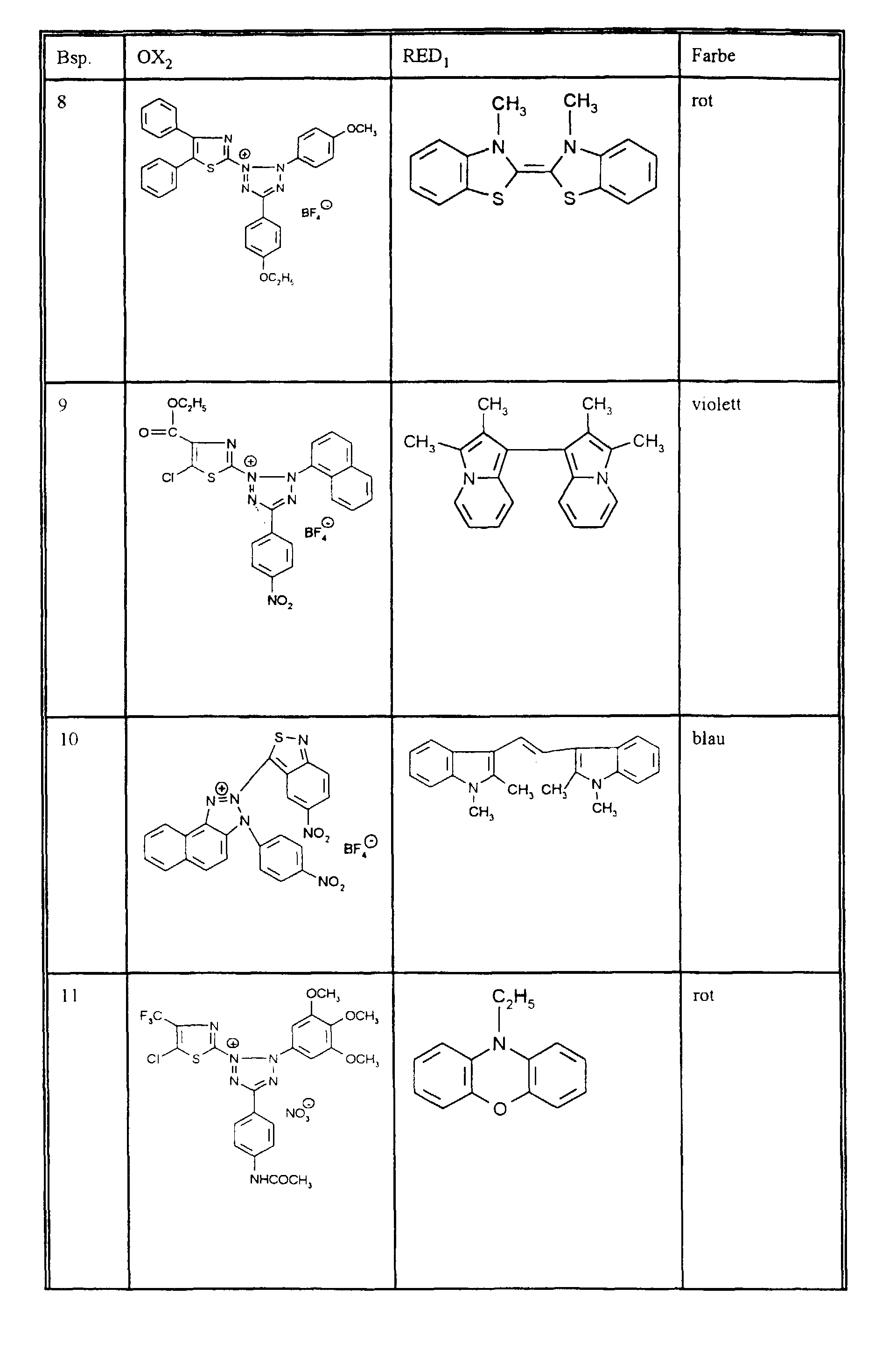

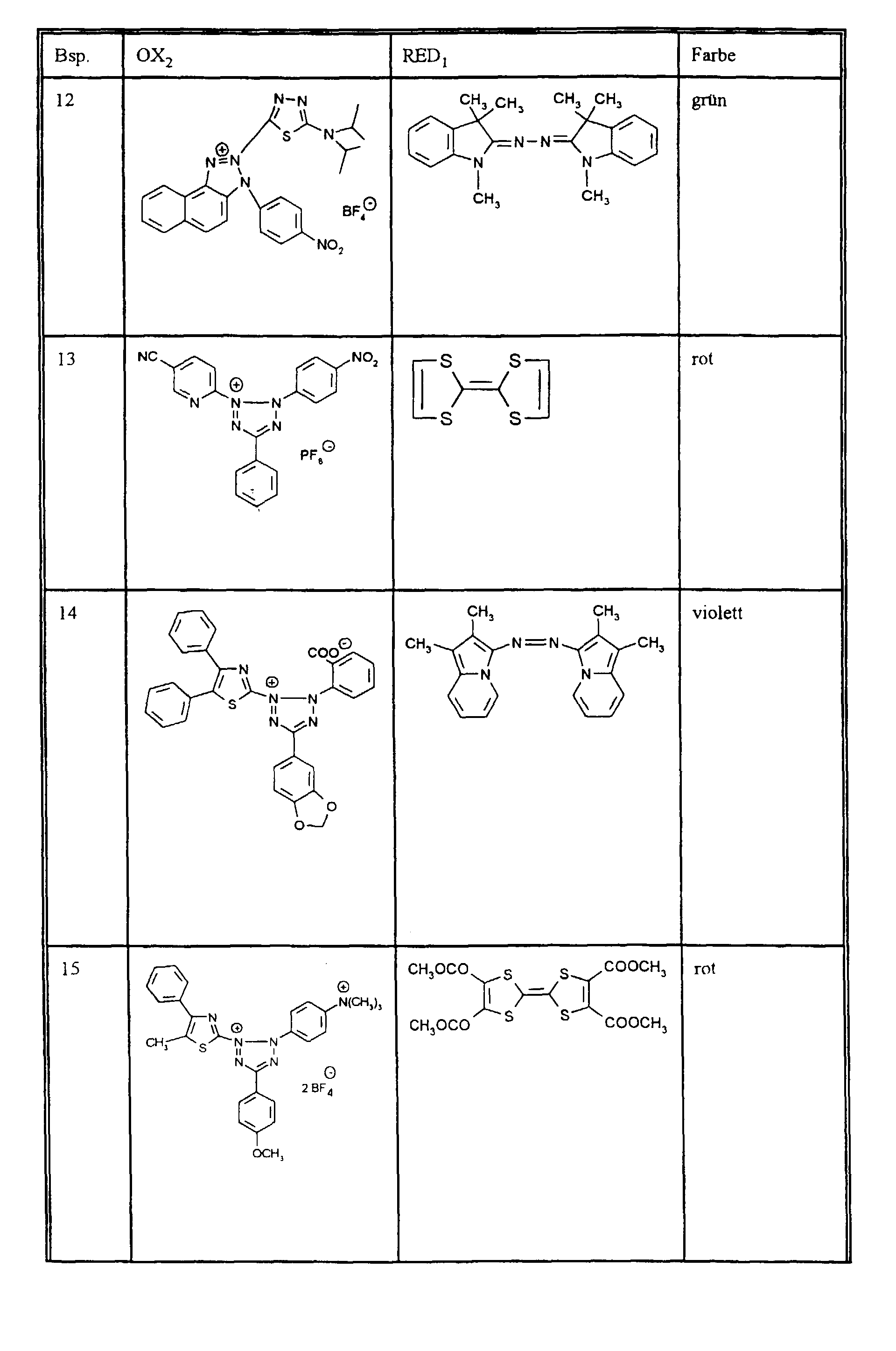

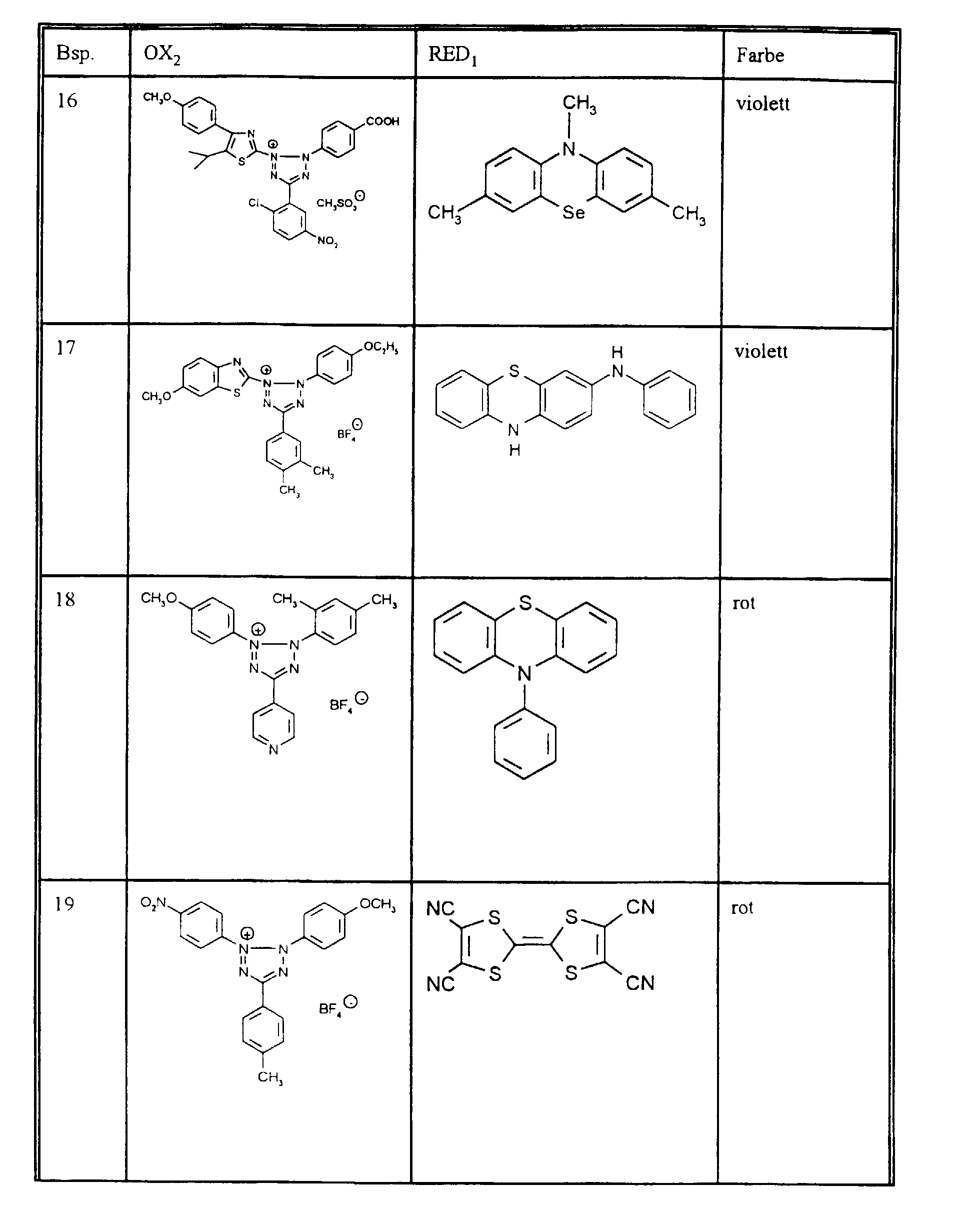

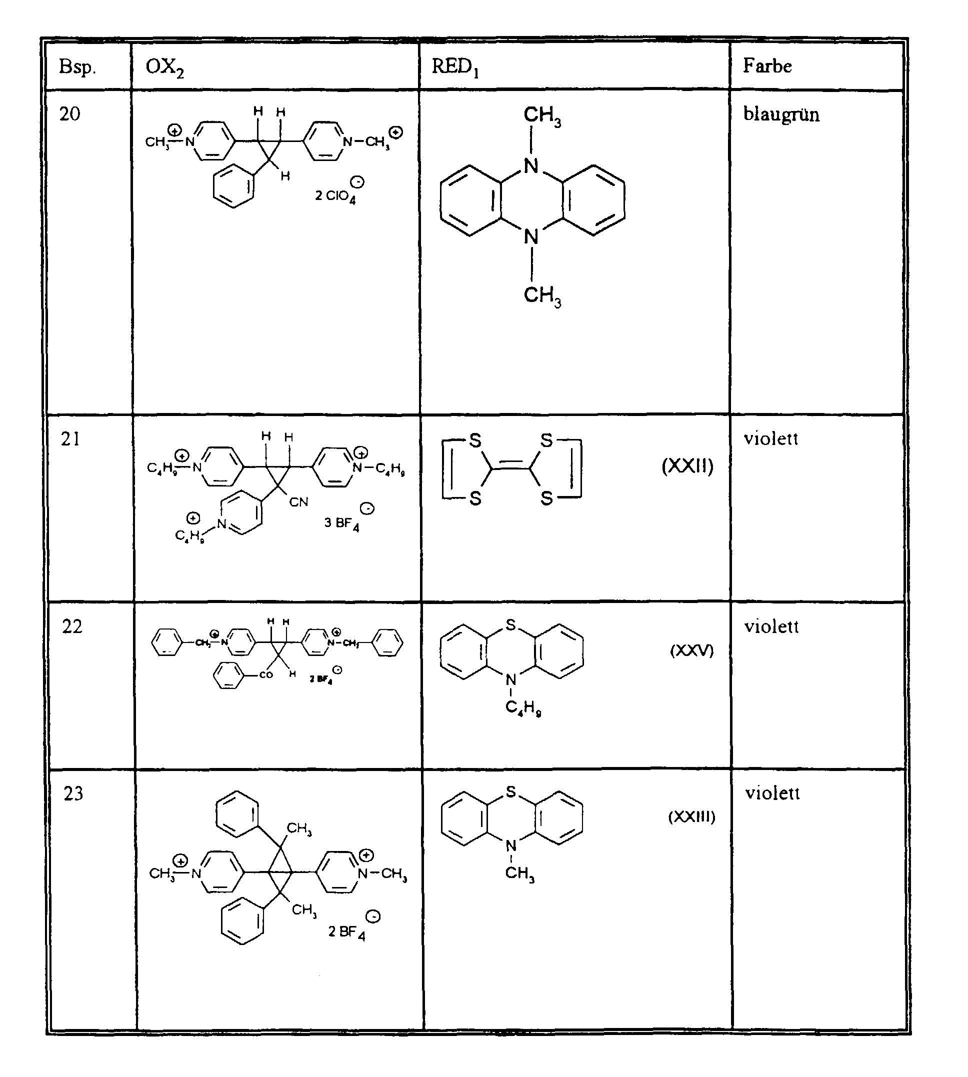

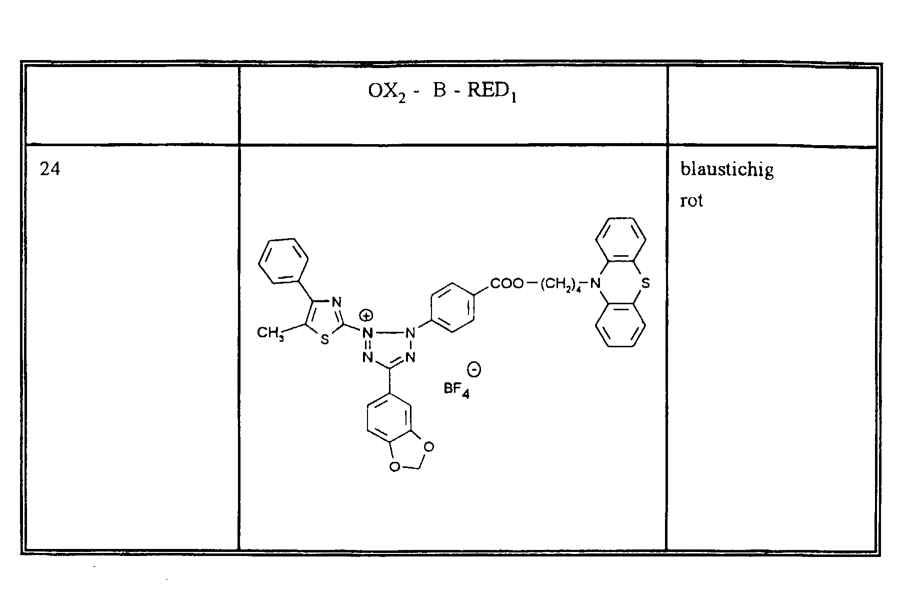

## Patentansprüche

1. Elektrochromes System, enthaltend mindestens eine oxidierbare Substanz RED₁, die durch Elektronenabgabe an einer Anode und mindestens eine reduzierbare Substanz OX₂, die durch Elektronenaufnahme an einer Kathode, jeweils unter Zunahme der Extinktion im sichtbaren Bereich des Spektrums von einer schwach gefärbten oder farblosen Form in eine gefärbte Form OX₁ bzw. RED₂ übergeht, wobei nach Ladungsausgleich jeweils die schwach gefärbte bzw. farblose Form zurückgebildet wird, dadurch gekennzeichnet, daß bei mindestens einer der enthaltenen Substanzen RED₁ oder OX₂ die wechselseitige Umwandlung von oxidierbarer und reduzierbarer Form durch Bruch bzw. Bildung einer σ-Bindung erfolgt, wobei keine radikal(ion)ischen Spezies entstehen.

2. Elektrochromes System gemäß Anspruch 1, dadurch gekennzeichnet, daß als reduzierbare Substanz OX₂ eine cyclische organische Verbindung enthalten ist, die nach Aufnahme von 2 Elektronen unter Bruch einer der σ-Bindungen des Ringes in eine ringoffene Verbindung übergeht und die durch Abgabe von 2 Elektronen wieder in die cyclische Ausgangsverbindung übergeht.

3. Elektrochromes System gemäß Ansprüchen 1 und 2, dadurch gekennzeichnet, daß als reduzierbare Substanz OX₂, die reversibel unter Bruch einer σ-Bindung in die entsprechende Substanz RED₂ übergeht, eine Verbindung aus der Reihe der Tetrazoliumsalze, Benzotriazoliumsalze, Naphthotriazoliumsalze, Cyclopropane und [1.1.0]Bicyclobutane enthalten ist.

4. Elektrochromes System gemäß Ansprüchen 1 bis 3, dadurch gekennzeichnet, daß als reduzierbare Substanz OX₂ mindestens eine Verbindung der Formeln 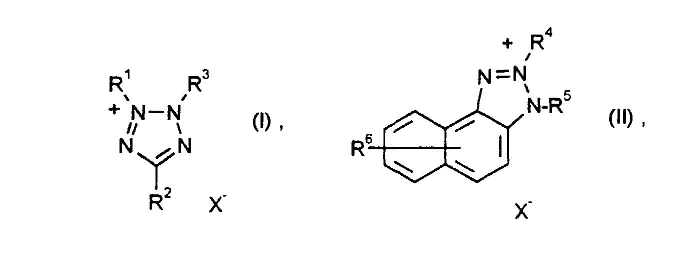 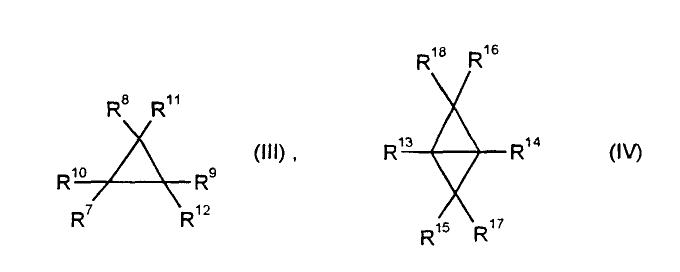 worin
R¹ bis R⁵ unabhängig voneinander C₆- bis C₁₀-Aryl oder einen gegebenenfalls benzanellierten aromatischen oder quasiaromatischen fünf- oder sechsgliedrigen heterocyclischen Ring bedeuten,
R⁷, R⁹, R¹³ und R¹⁴ unabhängig voneinander einen Rest der Formeln (V) bis (VII) 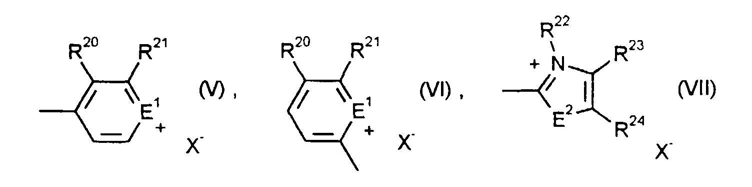 bedeuten,
R⁸, R¹⁵ und R¹⁶ unabhängig voneinander C₆- bis C₁₀-Aryl, C₇-C₁₁-Aroyl oder einen Rest der Formeln (V) bis (VII) bedeuten,
R¹⁰ bis R¹², R¹⁷ und R¹⁸ unabhängig voneinander Wasserstoff, C₁- bis C₄-Alkyl, Halogen oder Cyano bedeuten,
E¹ und E² unabhängig voneinander O, S oder N-R¹⁹ bedeuten,
R¹⁹ und R²² unabhängig voneinander C₁- bis C₁₈-Alkyl, C₂- bis C₈-Alkenyl, C₄- bis C₇-Cycloalkyl, C₇- bis C₁₅-Aralkyl oder C₆- bis C₁₀-Aryl bedeuten,
R⁶, R²⁰, R²¹, R²³ und R²⁴ unabhängig voneinander Wasserstoff, C₁- bis C₄-Alkyl, C₁- bis C₄-Alkoxy, Halogen, Cyano, Nitro oder C₁- bis C₄-Alkoxycarbonyl bedeuten oder
R²⁰ und R²¹ bzw. R²³ und R²⁴ gemeinsam eine -CH=CH-CH=CH-Brücke bilden,
und
X⁻ ein unter den Bedingungen redox-inertes, farbloses Anion bedeutet,
enthalten ist.

5. Elektrochromes System gemäß Ansprüchen 1 bis 4, dadurch gekennzeichnet, daß als oxidierbare Substanz RED₁ eine organische Verbindung enthalten ist, die zweistufig reversibel 2 Elektronen abgeben kann, wobei die Differenz der beiden Oxidationsstufen vorzugsweise mindestens 250 mV beträgt.

6. Elektrochromes System gemäß Ansprüchen 1 bis 5, dadurch gekennzeichnet, daß als zweistufig reversibel oxidierbare Substanz RED₁ eine Verbindung der Formeln (VIII) bis (XVIII) 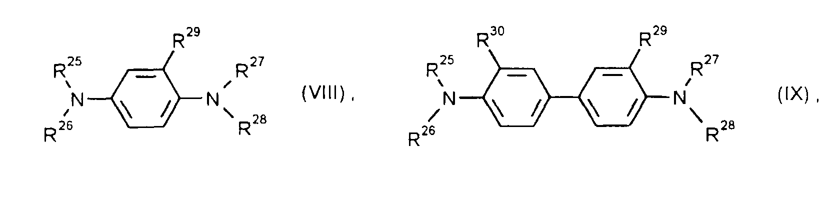 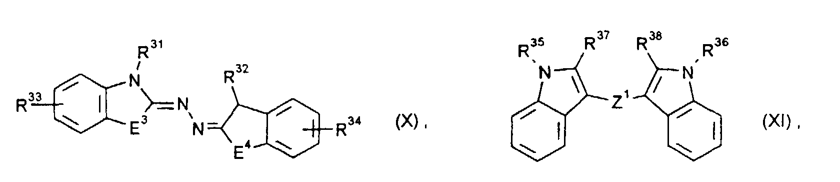 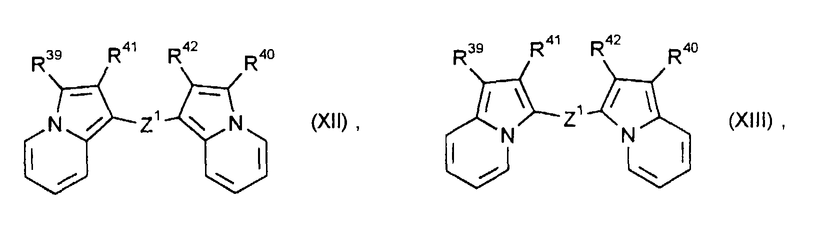 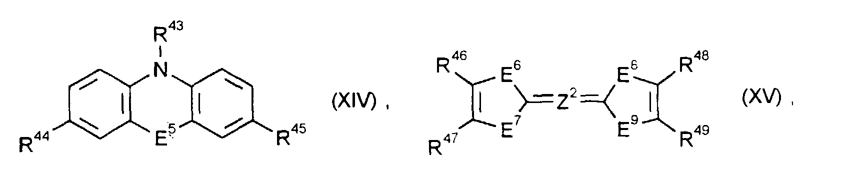 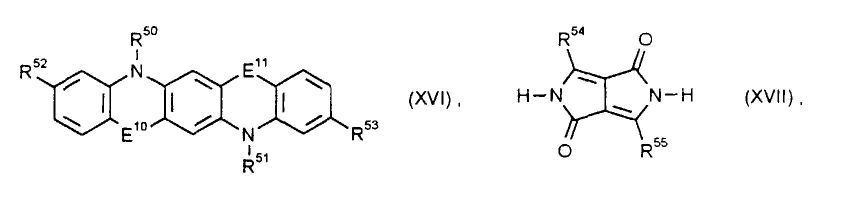 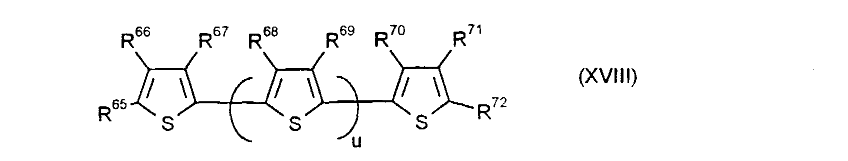 worin
R²⁵ bis R²⁸, R³¹, R³², R³⁵, R³⁶, R⁴³, R⁵⁰ und R⁵¹ unabhängig voneinander C₁- bis C₁₈-Alkyl, C₂- bis C₁₂-Alkenyl, C₄- bis C₇-Cycloalkyl, C₇-bis C₁₅-Aralkyl oder C₆- bis C₁₀-Aryl bedeuten, und R⁴³, R⁵⁰ und R⁵¹ zusätzlich Wasserstoff bedeuten,
R²⁹, R³⁰, R³³, R³⁴, R³⁷, R³⁸, R³⁹ bis R⁴², R⁴⁴, R⁴⁵, R⁴⁶ bis R⁴⁹ und R⁵² bis R⁵⁵ unabhängig voneinander Wasserstoff, C₁- bis C₄-Alkyl, C₁- bis C₄-Alkoxy, Halogen, Cyano, Nitro, C₁- bis C₄-Alkoxycarbonyl oder C₆- bis C₁₀-Aryl bedeuten und R⁵⁴ und R⁵⁵ zusätzlich einen gegebenenfalls benzanellierten aromatischen oder quasiaromatischen fünf- oder sechsgliedrigen heterocyclischen Ring oder einen Rest der Formeln (V) oder (VI) bedeuten, und R⁴⁵ zusätzlich NR⁷³R⁷⁴ bedeutet, oder
R⁴⁶ und R⁴⁷ und/oder R⁴⁸ und R⁴⁹ eine -(CH₂)₃-, -(CH₂)₄-, -(CH₂)₅- oder -CH=CH-CH=CH-Brücke bilden,
Z¹ eine direkte Bindung, eine -CH=CH- oder -N=N-Brücke bedeutet,
=Z²= eine direkte Doppelbindung, eine =CH-CH= oder =N-N=Brücke bedeutet,
E³ bis E⁵, E¹⁰ und E¹¹ unabhängig voneinander O, S, NR⁵⁶ oder C(CH₃)₂ bedeuten, und E⁵ zusätzlich C = O oder SO₂ bedeutet, oder
E³ und E⁴ unabhängig voneinander zusätzlich -CH=CH- bedeuten,
E⁶ bis E⁹ unabhängig voneinander S, Se oder NR⁵⁶ bedeuten,
R⁵⁶, R⁷³ und R⁷⁴ unabhängig voneinander C₁- bis C₁₂-Alkyl, C₂- bis C₈-Alkenyl, C₄- bis C₇-Cycloalkyl, C₇- bis C₁₅-Aralkyl oder C₆- bis C₁₀-Aryl bedeuten, und R⁷³ zusätzlich Wasserstoff bedeutet, oder
R⁷³ und R⁷⁴ in der Bedeutung von NR⁷³R⁷⁴ gemeinsam mit dem N-Atom an das sie gebunden sind einen fünf- oder sechsgliedrigen gesättigten Ring bilden, der weitere Heteroatome enthalten kann,
R⁶⁵ bis R⁷² unabhängig voneinander Wasserstoff, C₁- bis C₆-Alkyl, C₁- bis C₄-Alkoxy, Cyano, C₁- bis C₄-Alkoxycarbonyl oder C₆- bis C₁₀-Aryl bedeuten und
R⁶⁵ und R⁶⁶ sowie R⁷¹ und R⁷² unabhängig voneinander zusätzlich eine -(CH₂)₃-, -(CH₂)₄- oder -CH=CH-CH=CH-Brücke bilden können und
u eine ganze Zahl zwischen 0 und 10 bedeutet,
enthalten ist.

7. Elektrochromes System gemäß Anspruch 1, dadurch gekennzeichnet, daß mindestens ein Paar oxidierbarer und reduzierbarer Substanzen RED₁/OX₂ enthalten ist.

8. Elektrochromes System gemäß Ansprüchen 1 bis 7, dadurch gekennzeichnet, daß ein Paar RED₁/OX₂ enthalten ist, wobei die Substanz OX₂ ein Tetrazoliniumsalz der Formel (I) gemäß Anspruch 4 darstellt,
worin
R¹ und R² einem Rest der Formel (XIX) 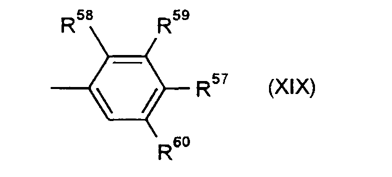 entsprechen und
R³ einem Rest der Formel (XX) 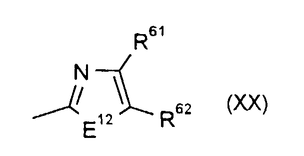 entspricht,
worin
R⁵⁷, R⁵⁹ und R⁶⁰ unabhängig voneinander Wasserstoff, Methyl, Ethyl, Methoxy, Ethoxy, Cyano, Nitro, -N⁺(CH₃)₃ oder COOH bedeuten oder
R⁵⁷ und R⁵⁹ gemeinsam eine -O-CH₂-O-Brücke bilden,
R⁵⁸ Wasserstoff, Methyl, Methoxy oder Chlor bedeutet,
R⁶¹ Methyl, Difluormethyl, Trifluormethyl, Methoxycarbonyl, Ethoxycarbonyl oder Phenyl bedeutet,
R⁶² Wasserstoff, Methyl, Ethyl, Phenyl oder Chlor bedeutet oder
R⁶¹ und R⁶² zusammen eine -CH=CH-CH=CH- oder -CH=CH-C(OCH₃)=CH-Brücke bilden,
E¹² S bedeutet,
X⁻ ein unter den Bedingungen redox-inertes, farbloses Anion bedeutet,
und die Substanz RED₁ eine Verbindung ausgewählt aus der Reihe der Formeln (VIII), (X), (XI), (XIV) und (XV) gemäß Anspruch 6 darstellt, worin
R²⁵ bis R²⁸, R³¹, R³², R³⁵, R³⁶, R⁴³ und R⁵⁶ Methyl, Ethyl, Propyl, Butyl, Pentyl, Hexyl oder Benzyl bedeuten, wobei jeweils R²⁵ bis R²⁸, R³¹ und R³², sowie R³⁵ und R³⁶ gleich sind, und R⁴³ zusätzlich Wasserstoff bedeutet,
R²⁹ und R⁴⁴ Wasserstoff bedeuten, R⁴⁵ Wasserstoff, Methoxy, Ethoxy, Dimethylamino, Diethylamino, Anilino, N-Methylanilino oder Piperidino bedeutet,
R³³ und R³⁴ gleich sind und Wasserstoff, Methyl, Methoxy, Chlor, Cyano oder Methoxycarbonyl bedeuten,
E³ bis E⁵ O, S oder NR⁵⁶ bedeuten, E³ und E⁴ aber gleich sind,
R³⁷ und R³⁸ gleich sind und Wasserstoff, Methyl, Ethyl, Propyl, Butyl oder Phenyl bedeuten,
Z¹ eine direkte Bindung oder -CH=CH- bedeutet,
R⁴⁶ bis R⁴⁹ gleich sind und Wasserstoff, Methyl, Methoxy, Chlor, Cyano, Methoxycarbonyl, Ethoxycarbonyl oder Phenyl bedeuten,
E⁶ bis E⁹ gleich sind und S, Se oder NR⁵⁶ bedeuten,
=Z²= eine direkte Doppelbindung, eine =CH-CH= oder =N-N=Brücke bedeutet,
R⁶⁵ und R⁶⁶ sowie R⁷¹ und R⁷² eine -(CH₂)₃- oder -(CH₂)₄-Brücke bedeuten,
R⁶⁷ bis R⁷⁰ Wasserstoff bedeuten und
u eine ganze Zahl von 1 bis 6 bedeutet.

9. Elektrochromes System gemäß Ansprüchen 1 bis 8, dadurch gekennzeichnet, daß ein Paar oxidierbarer und reduzierbarer Substanzen RED₁/OX₂ enthalten ist, wobei RED₁ und OX₂ über eine Brücke B miteinander verknüpft sind und OX₂ einer Verbindung der Formeln (I) bis (IV) gemäß Anspruch 4 entspricht und RED₁ einer der Formeln (VIII) bis (XVIII) gemäß Anspruch 6 entspricht, wobei
B für eine Brücke der Formeln -(CH₂)ₙ- oder -[Y¹ₛ-(CH₂)ₘ-Y²]ₒ-(CH₂)ₚ-Y³_{q}- steht, die durch C₁- bis C₄-Alkyl, C₁- bis C₄-Alkoxy, Halogen oder Phenyl substituiert sein kann,
Y¹ bis Y³ unabhängig voneinander für O, S, NR⁶³, COO, CONH, NHCONH, Cyclopentandiyl, Cyclohexandiyl, Phenylen oder Naphthylen stehen,
R⁶³ C₁- bis C₆-Alkyl, C₂- bis C₆-Alkenyl, C₄- bis C₇-Cycloalkyl, C₇-bis C₁₅-Aralkyl oder C₆- bis C₁₀-Aryl bedeutet,
n eine ganze Zahl von 1 bis 12 bedeutet,
m und p unabhängig voneinander eine ganze Zahl von 0 bis 8 bedeuten,
o eine ganze Zahl von 0 bis 6 bedeutet,
q und s unabhängig voneinander 0 oder 1 bedeuten,
R¹⁹, R²¹ bis R²⁵, R³¹, R³⁵, R³⁹, R⁴¹, R⁴³, R⁴⁶, R⁵⁰, R⁵⁴, R⁵⁶, R⁵⁷, R⁵⁹, R⁶¹, R⁶², R⁶⁴, R⁶⁵ oder R⁶⁶ eine direkte Bindung zur Brücke B bilden oder R⁴⁶, R⁵⁷ oder R⁵⁹ eine -COO-Brücke zur Brücke B bilden.

10. Elektrochrome Flüssigkeit enthaltend ein elektrochromes System gemäß wenigstens einem der Ansprüche 1 bis 9 und mindestens ein inertes Lösungsmittel.

11. Elektrochrome Vorrichtung enthaltend eine elektrochrome Flüssigkeit gemäß Anspruch 10.

12. Elektrochrome Vorrichtung gemäß Anspruch 11, dadurch gekennzeichnet, daß sie als Zelle wie z.B. eine Solarzelle, als Fensterscheibe, Spiegel, Sonnendach oder Display ausgebildet ist.

13. Elektrochrome Vorrichtung gemäß Ansprüchen 11 und 12, dadurch gekennzeichnet, daß sie aus zwei einander zugewandten lichtdurchlässigen Glas- oder Kunststoffscheiben besteht, von denen gegebenenfalls eine verspiegelt ist und deren einander zugewandten Seiten elektrisch leitfähig beschichtet sind zwischen denen die elektrochrome Flüssigkeit enthalten ist.

## Claims

1. Electrochromic system comprising at least one oxidizable substance RED₁ which, by releasing electrons at an anode, is converted from a weakly coloured or colourless form into a coloured form OX₁, and at least one reducible substance OX₂ which, by accepting electrons at a cathode, is converted from a weakly coloured or colourless form into a coloured form RED₂, the absorbance in the visible region of the spectrum increasing in each of these cases, and the weakly coloured or colourless form being recovered in each case after charge equalization, characterized in that the reciprocal conversion of oxidized and reducible form takes place by a σ bond being broken or formed, respectively, for at least one of the comprised substances RED₁ or OX₂, with no (ionic) free radical species being produced

2. Electrochromic system according to Claim 1, characterized in that it comprises, as the reducible substance OX₂, a cyclic organic compound which, after accepting 2 electrons, is converted, one of the σ bonds of the ring being broken, into an openring compound and which, by releasing 2 electrons, is converted once more into the cyclic starting compound.

3. Electrochromic system according to Claims 1 and 2, characterized in that it comprises, as the reducible substance OX₂ which is converted reversibly, a σ bond being broken, into the corresponding substance RED₂, a compound selected from the group consisting of the tetrazolium salts, benzotriazolium salts, naphthotriazolium salts, cyclopropanes and [1.1.0]bicyclobutanes.

4. Electrochromic system according to Claims 1 to 3, characterized in that it comprises, as the reducible substance OX₂, at least one compound of the formulae 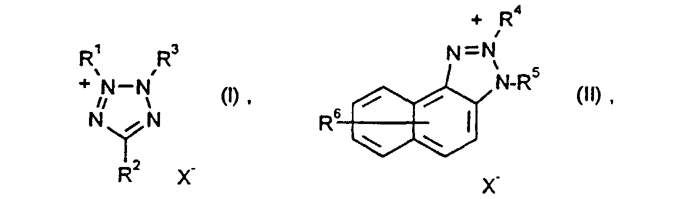 in which 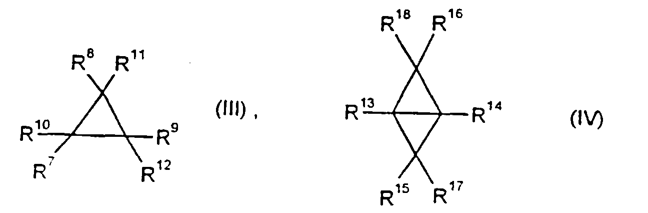
R¹ to R⁵, independently of one another, represent C₆- to C₁₀-aryl or an aromatic or quasi-aromatic five- or six-membered heterocyclic ring, each of which is optionally benzanellated,
R⁷, R⁹, R¹³ and R¹⁴, independently of one another, represent a radical of the formulae (V) to (VII) 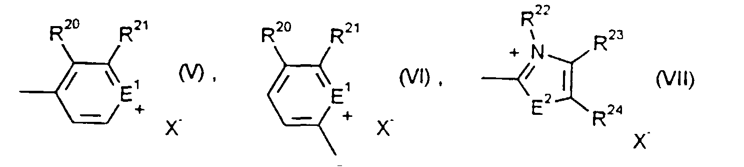
R⁸, R¹⁵ and R¹⁶, independently of one another, represent C₆- to C₁₀-aryl, C₇-C₁₁-aroyl or a radical of the formulae (V) to (VII),
R¹⁰ to R¹², R¹⁷ and R¹⁸, independently of one another, represent hydrogen, C₁- to C₄-alkyl, halogen or cyano,
E¹ and E², independently of one another, represent O, S or N-R¹⁹,
R¹⁹ and R²², independently of one another, represent C₁- to C₁₈-alkyl, C₂- to C₈-alkenyl, C₄- to C₇-cycloalkyl, C₇- to C₁₅-aralkyl or C₆- to C₁₀-aryl,
R⁶, R²⁰, R²¹, R²³ and R²⁴, independently of one another, represent hydrogen, C₁- to C₄-alkyl, C₁- to C₄-alkoxy, halogen, cyano, nitro or C₁- to C₄-alkoxycarbonyl, or
R²⁰ and R²¹, or R²³ and R²⁴, jointly form a -CH=CH-CH=CH- bridge,
and
X⁻ represents a colourless anion which is redox-inert under the conditions.

5. Electrochromic system according to Claims 1 to 4, characterized in that it comprises, as the oxidizable substance RED₁, an organic compound which is able to release 2 electrons reversibly in two stages, the difference of the two oxidation states being preferably at least 250 mV.

6. Electrochromic system according to Claims 1 to 5, characterized in that it comprises, as the substance RED₁ which is reversibly oxidizable in two stages, a compound of the formulae (VIII) to (XVIII) 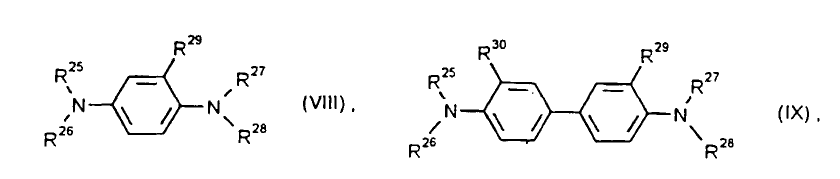 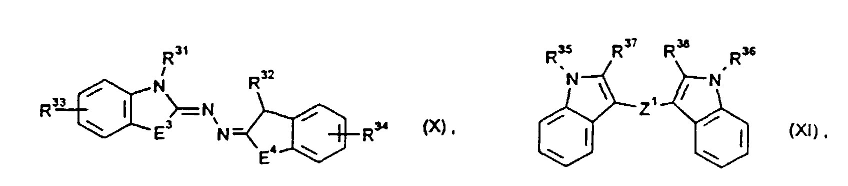 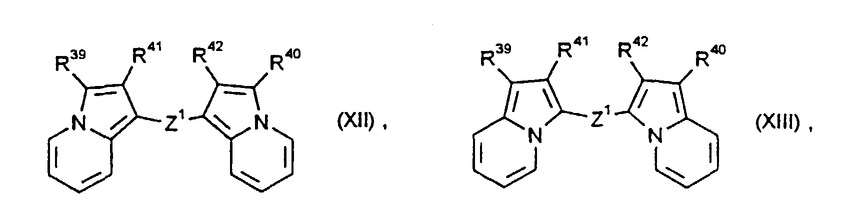 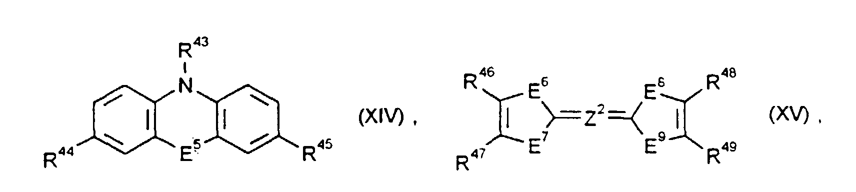 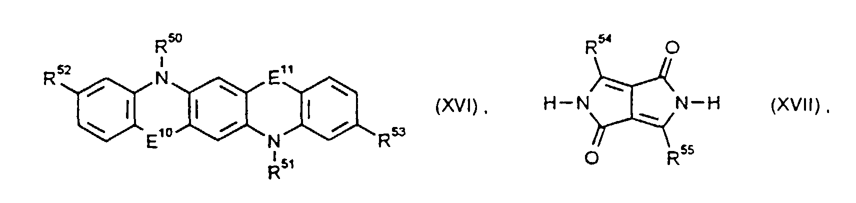 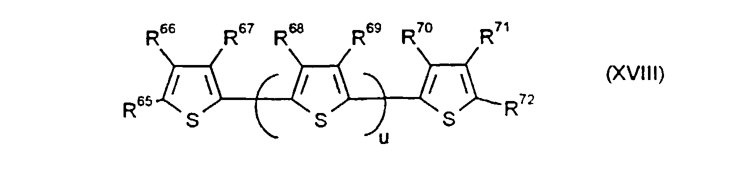 in which
R²⁵ to R²⁸, R³¹, R³², R³⁵, R³⁶, R⁴³, R⁵⁰ and R⁵¹, independently of one another, represent C₁- to C₁₈-alkyl, C₂- to C₁₂-alkenyl, C₄- to C₇-cycloalkyl, C₇- to C₁₅-aralkyl or C₆- to C₁₀-aryl, and R⁴³, R⁵⁰ and R⁵¹ additionally represent hydrogen,
R²⁹, R³⁰, R³³, R³⁴, R³⁷, R³⁸, R³⁹ to R⁴², R⁴⁴, R⁴⁵, R⁴⁶ to R⁴⁹ and R⁵² to R⁵⁵, independently of one another, represent hydrogen, C₁ - to C₄-alkyl, C₁ - to C₄-alkoxy, halogen, cyano, nitro, C₁ - to C₄-alkoxycarbonyl or C₆- to C₁₀-aryl, and R⁵⁴ and R⁵⁵ additionally represent an aromatic or quasi-aromatic five- or six-membered heterocyclic ring, each of which is optionally benzanellated, or a radical of the formulae (V) or (VI), and R⁴⁵ additionally represents NR⁷³R⁷⁴, or
R⁴⁶ and R⁴⁷ and/or R⁴⁸ and R⁴⁹ form a -(CH₂)₃-, -(CH₂)₄-, -(CH₂)₅- or -CH=CH-CH=CH- bridge,
Z¹ represents a direct bond, a -CH=CH- or -N=N- bridge,
=Z²= represents a direct double bond, a =CH-CH= or =N-N= bridge,
E³ to E⁵, E¹⁰ and E¹¹, independently of one another, represent O, S, NR⁵⁶ or C(CH₃)₂, and E⁵ additionally represents C=O or SO₂, or
E³ and E⁴, independently of one another, additionally represent -CH=CH-,
E⁶ to E⁹, independently of one another, represent S, Se or NR⁵⁶,
R⁵⁶, R⁷³ and R⁷⁴, independently of one another, represent C₁ - to C₁₂-alkyl, C₂- to C₈-alkenyl, C₄- to C₇-cycloalkyl, C₇- to C₁₅-aralkyl or C₆- to C₁₀-aryl, and R⁷³ additionally represents hydrogen, or
R₇₃ and R₇₄, in the context of NR⁷³R⁷⁴, jointly with the N atom to which they are bound form a five- or six-membered saturated ring which may contain further heteroatoms,
R⁶⁵ to R⁷², independently of one another, represent hydrogen, C₁- to C₆-alkyl, C₁-to C₄-alkoxy, cyano, C₁ - to C₄-alkoxycarbonyl or C₆- to C₁₀-aryl, and
R⁶⁵ and R⁶⁶, and R⁷¹ and R⁷², independently of one another, may additionally form a -(CH₂)₃-, -(CH₂)₄- or -CH=CH-CH=CH- bridge, and
u represents an integer between 0 and 10.

7. Electrochromic system according to Claim 1, characterized in that it comprises at least one couple of oxidizable and reducible substances RED₁/OX₂.

8. Electrochromic system according to Claims 1 to 7, characterized in that it comprises a couple RED₁/OX₂, the substance OX₂ being a tetrazolinium salt of formula (I) according to Claim 4,
in which
R¹ and R² correspond to a radical of formula (XIX), 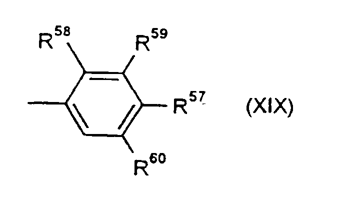 and
R³ corresponds to a radical of formula (XX), 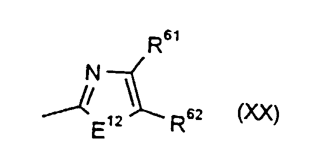 in which
R⁵⁷, R⁵⁹ and R⁶⁰, independently of one another, represent hydrogen, methyl, ethyl, methoxy, ethoxy, cyano, nitro, -N⁺(CH₃)₃ or COOH, or
R⁵⁷ and R⁵⁹ jointly form an -O-CH₂-O- bridge,
R⁵⁸ represents hydrogen, methyl, methoxy or chlorine,
R⁶¹ represents methyl, difluoromethyl, trifluoromethyl, methoxycarbonyl, ethoxycarbonyl or phenyl,
R⁶² represents hydrogen, methyl, ethyl, phenyl or chlorine, or
R⁶¹ and R⁶² together form a -CH=CH-CH=CH- or -CH=CH-C(OCH₃)=CH-bridge,
E¹² represents S,
X⁻ represents a colourless anion which is redox-inert under the conditions,
and the substance RED₁ is a compound selected from the group consisting of the formulae (VIII), (X), (XI), (XIV) and (XV) according to Claim 6, in which
R²⁵ to R²⁸, R³¹, R³², R³⁵, R³⁶, R⁴³ and R⁵⁶ represent methyl, ethyl, propyl, butyl, pentyl, hexyl or benzyl, R²⁵ to R²⁸, R³¹ and R³², and R³⁵ and R³⁶, respectively, being identical and R⁴³ additionally representing hydrogen,
R²⁹ and R⁴⁴ represent hydrogen, R⁴⁵ represents hydrogen, methoxy, ethoxy, dimethylamino, diethylamino, anilino, N-methylanilino or piperidino,
R³³ and R³⁴ are identical and represent hydrogen, methyl, methoxyl chlorine, cyano or methoxycarbonyl,
E³ to E⁵ represent O, S or NR⁵⁶, but E³ and E⁴ are identical,
R³⁷ and R³⁸ are identical and represent hydrogen, methyl, ethyl, propyl, butyl or phenyl,
Z¹ represents a direct bond or -CH=CH-,
R⁴⁶ to R⁴⁹ are identical and represent hydrogen, methyl, methoxy, chlorine, cyano, methoxycarbonyl, ethoxycarbonyl or phenyl,
E⁶ to E⁹ are identical and represent S, Se or NR⁵⁶,
=Z²= represents a direct double bond, a =CH-CH= or =N-N= bridge,
R⁶⁵ and R⁶⁶, and R⁷¹ and R⁷² represent a -(CH₂)₃- or -(CH₂)₄- bridge,
R⁶⁷ to R⁷⁰ represent hydrogen, and
u represents an integer from 1 to 6.

9. Electrochromic system according to Claims 1 to 8, characterized in that it comprises a couple of oxidizable and reducible substances RED₁/OX₂, RED₁ and OX₂ being linked via a bridge B and OX₂ corresponding to a compound of the formulae (I) to (IV) according to Claim 4 and RED₁ corresponding to one of the formulae (VIII) to (XVIII) according to Claim 6, in which
B represents a bridge of the formulae -(CH₂)ₙ- or
-[Y¹ₛ-(CH₂)ₘ-Y²]ₒ-(CH₂)ₚ-Y³_{q}-, which may be substituted by C₁ - to C₄-alkyl, C₁ - to C₄-alkoxy, halogen or phenyl,
Y¹ to Y³, independently of one another, represent O, S, NR⁶³, COO, CONH, NHCONH, cyclopentanediyl, cyclohexanediyl, phenylene or naphthylene,
R⁶³ represents C₁- to C₆-alkyl, C₂- to C₆-alkenyl, C₄- to C₇-cycloalkyl, C₇- to C₁₅-aralkyl or C₆- to C₁₀-aryl,
n represents an integer from 1 to 12,
m and p, independently of one another, represent an integer from 0 to 8,
o represents an integer from 0 to 6,
q and s, independently of one another, represent 0 or 1,
R¹⁹, R²¹ to R²⁵, R³¹, R³⁵, R³⁹, R⁴¹, R⁴³, R⁴⁶, R⁵⁰, R⁵⁴, R⁵⁶, R⁵⁷, R⁵⁹, R⁶¹, R⁶², R⁶⁴, R⁶⁵ or R⁶⁶ form a direct bond to the bridge B, or R⁴⁶, R⁵⁷ or R⁵⁹ form a -COO-bridge to the bridge B.

10. Electrochromic fluid comprising an electrochromic system according to one of Claims 1 to 9 and at least one inert solvent.

11. Electrochromic device comprising an electrochromic fluid according to Claim 10.

12. Electrochromic device according to Claim 11, characterized in that it is designed as a cell such as e.g. a solar cell, as a window pane, mirror, canopy or display.

13. Electrochromic device according to Claims 11 and 12, characterized in that it comprises two transparent glass or plastic panes which face one another, one of which optionally is mirrored and whose sides which face one another are coated electroconductively, between which the electrochromic fluid is contained.

## Revendications

1. Système électrochrome contenant au moins une substance oxydable RED₁ qui, en cédant des électrons à une anode, et au moins une substance réductible OX₂ qui, en captant des électrons à une cathode, chaque fois avec augmentation de l'extinction dans le domaine visible du spectre, passe d'une forme faiblement colorée ou incolore à une forme colorée OX₁, respectivement RED₂, dans lequel, après la neutralisation des charges, à chaque fois la forme faiblement colorée, respectivement incolore se reforme, caractérisé en ce que, dans au moins une des substances RED₁ ou OX₂ qu'il contient, la transformation réciproque de la forme oxydable et de la forme réductible a lieu par rupture, respectivement par formation d'une liaison σ en l'absence de formation d'une espèce radicalaire(ionique).

2. Système électrochrome selon la revendication 1, caractérisé en ce qu'il contient, à titre de substance réductible OX₂, un composé organique cyclique qui, après avoir capté deux électrons, se transforme en un composé à noyau ouvert par rupture d'une des liaisons σ du noyau et qui, en cédant deux électrons, se transforme à nouveau en composé de départ cyclique.

3. Système électrochrome selon les revendications 1 et 2, caractérisé en ce qu'il contient, à titre de substance réductible OX₂ qui se transforme de manière réversible en substance correspondante RED₂ par rupture d'une liaison σ, un composé choisi parmi la série comprenant des sels de tétrazolium, des sels de benzotriazolium, des sels de naphtotriazolium, des cyclopropanes et des [1.1.0]bicyclobutanes.

4. Système électrochrome selon les revendications 1 à 3, caractérisé en ce qu'il contient, à titre de substance réductible OX₂, au moins un composé répondant aux formules 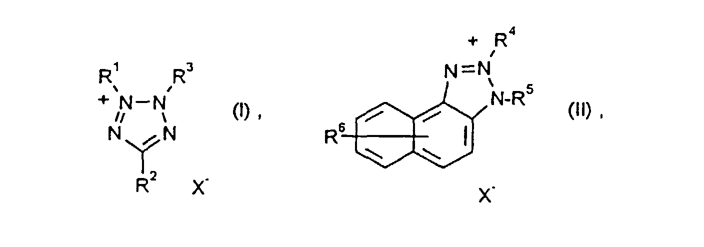 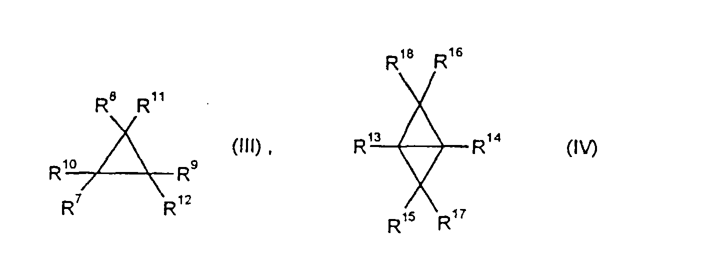 dans lesquelles
R¹ à R⁵ représentent, indépendamment l'un de l'autre, un groupe aryle en C₆-C₁₀ ou un noyau hétérocyclique pentagonal ou hexagonal aromatique ou quasi-aromatique, le cas échéant accolé à un noyau benzénique,
R⁷, R⁹, R¹³ et R¹⁴ représentent, indépendamment l'un de l'autre, un radical répondant aux formules (V) à (VII) 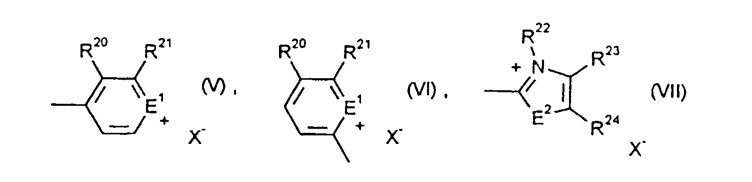
R⁸, R¹⁵ et R¹⁶ représentent, indépendamment l'un de l'autre, un groupe aryle en C₆-C₁₀, un groupe aroyle en C₇-C₁₁ ou encore un radical répondant aux formules (V) à (VII),
R¹⁰ à R¹², R¹⁷ et R¹⁸ représentent, indépendamment l'un de l'autre, un atome d'hydrogène, un groupe alkyle en C₁-C₄, un atome d'halogène ou un groupe cyano,
E¹ et E² représentent, indépendamment l'un de l'autre, un atome d'oxygène, un atome de soufre ou un groupe N-R¹⁹,
R¹⁹ et R²² représentent, indépendamment l'un de
l'autre, un groupe alkyle en C₁-C₁₈, un groupe alcényle en C₂-C₈, un groupe cycloalkyle en C₄-C₇, un groupe aralkyle en C₇-C₁₅ ou un groupe aryle en C₆-C₁₀,
R⁶, R²⁰, R²¹, R²³ et R²⁴ représentent, indépendamment l'un de l'autre, un atome d'hydrogène, un groupe alkyle en C₁-C₄, un groupe alcoxy en C₁-C₄, un atome d'halogène, un groupe cyano, un groupe nitro ou un groupe alcoxy(en C₁-C₄)carbonyle, ou bien
R²⁰ et R²¹, respectivement R²³ et R²⁴ forment ensemble un pont -CH=CH-CH=CH-,
et
X⁻ représente un anion incolore inerte vis-à-vis d'un système redox dans les conditions données.

5. Système électrochrome selon les revendications 1 à 4, caractérisé en ce qu'il contient, à titre de substance oxydable RED₁, un composé organique qui peut céder deux électrons de manière réversible en deux étapes, la différence des deux degrés d'oxydation s'élevant de préférence à au moins 250 mV.

6. Système électrochrome selon les revendications 1 à 5, caractérisé en ce qu'il contient, à titre de substance RED₁ oxydable de manière réversible en deux étapes, un composé répondant aux formules (VIII) à (XVIII) 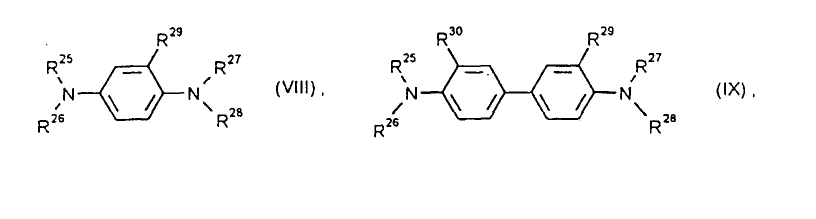 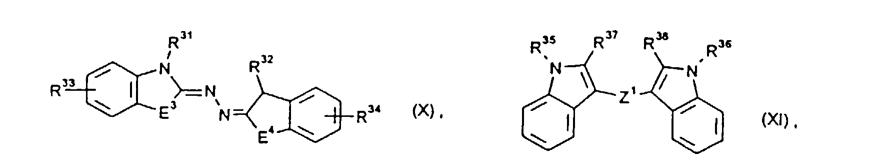 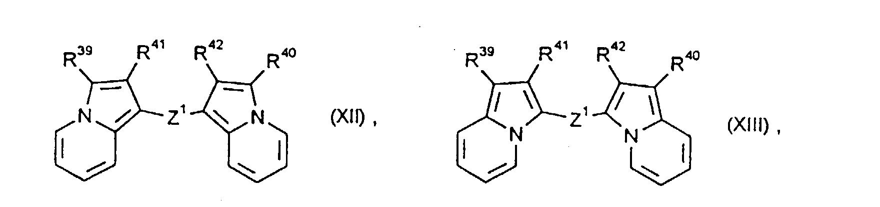 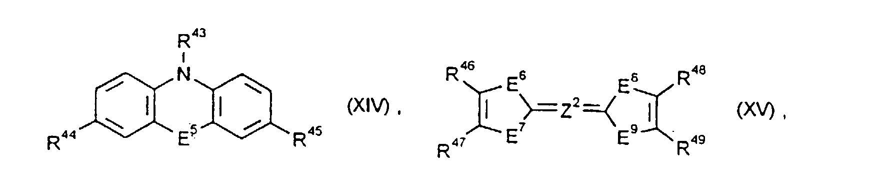 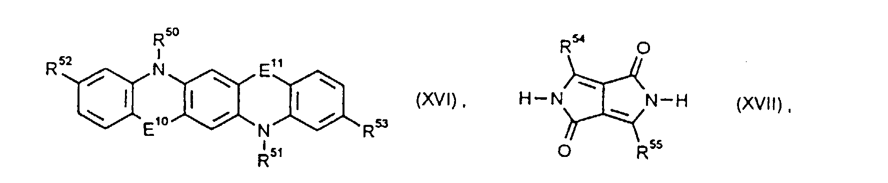 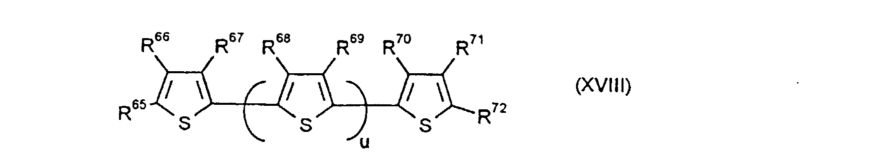 dans lesquelles
R²⁵ à R²⁸, R³¹, R³², R³⁵, R³⁶, R⁴³, R⁵⁰ et R⁵¹ représentent, indépendamment l'un de l'autre, un groupe alkyle en C₁-C₁₈, un groupe alcényle en C₂-C₁₂, un groupe cycloalkyle en C₄-C₇, un groupe aralkyle en C₇-C₁₅ ou un groupe aryle en C₆-C₁₀, et R⁴³, R⁵⁰ et R⁵¹ représentent en outre un atome d'hydrogène,
R²⁹, R³⁰, R³³, R³⁴, R³⁷, R³⁸, R³⁹ à R⁴², R⁴⁴, R⁴⁵, R⁴⁶ à R⁴⁹ et R⁵² à R⁵⁵ représentent, indépendamment l'un de l'autre, un atome d'hydrogène, un groupe alkyle en C₁-C₄, un groupe alcoxy en C₁-C₄, un atome d'halogène, un groupe cyano, un groupe nitro, un groupe alcoxy(en C₁-C₄)carbonyle ou un groupe aryle en C₆-C₁₀, et R⁵⁴ et R⁵⁵ représentent en outre un noyau hétérocyclique pentagonal ou hexagonal aromatique ou quasi-aromatique, le cas échéant accolé à un noyau benzénique, ou représente un radical répondant aux formules (V) ou (VI), R⁴⁵ représente en outre un groupe NR⁷³R⁷⁴, ou bien
R⁴⁶ et R⁴⁷ et/ou R⁴⁸ et R⁴⁹ représentent un pont -(CH₂)₃-, un pont -(CH₂)₄-, un pont -(CH₂)₅- ou un pont -CH=CH-CH=CH-,
Z¹ représente une liaison directe, un pont -CH=CH- ou un pont -N=N-,
=Z²= représente une liaison double directe, un pont =CH-CH= ou un pont =N-N=,
E³ à E⁵, E¹⁰ et E¹¹ représentent, indépendamment l'un de l'autre, un atome d'oxygène, un atome de soufre, un groupe NR⁵⁶ ou un groupe C(CH₃)₂, et E⁵ représente en outre un groupe C=O ou un groupe SO₂, ou bien
E³ et E⁴ représentent, indépendamment l'un de l'autre, en outre, un groupe -CH=CH-,
E⁶ à E⁹ représentent, indépendamment l'un de l'autre, un atome de soufre, un atome de sélénium ou un groupe NR⁵⁶,
R⁵⁶, R⁷³ et R⁷⁴ représentent, indépendamment l'un de l'autre, un groupe alkyle en C₁-C₁₂, un groupe alcényle en C₂-C₈, un groupe cycloalkyle en C₄-C₇, un groupe aralkyle en C₇-C₁₅ ou un groupe aryle en C₆-C₁₀, et R⁷³ représente en outre un atome d'hydrogène, ou bien
R⁷³ et R⁷⁴, dans la signification de NR⁷³R⁷⁴, forment ensemble, avec l'atome d'azote auquel ils sont liés, un noyau pentagonal ou hexagonal saturé qui peut contenir des hétéroatomes supplémentaires,
R⁶⁵ à R⁷² représentent, indépendamment l'un de l'autre, un atome d'hydrogène, un groupe alkyle en C₁-C₆, un groupe alcoxy en C₁-C₄, un groupe cyano, un groupe alcoxy(en C₁-C₄)carbonyle ou un groupe aryle en C₆-C₁₀, et
R⁶⁵ et R⁶⁶, de même que R⁷¹ et R⁷², peuvent former en outre, indépendamment l'un de l'autre, un pont -(CH₂)₃-, un pont -(CH₂)₄- ou un pont -CH=CH-CH=CH-, et
u représente un nombre entier entre 0 et 10.

7. Système électrochrome selon la revendication 1, caractérisé en ce qu'il contient au moins une paire de substances oxydable et réductible RED₁/OX₂.

8. Système électrochrome selon les revendications 1 à 7, caractérisé en ce qu'il contient une paire RED₁/OX₂, la substance OX₂ représentant un sel de tétrazolinium répondant à la formule (I) selon la revendication 4, dans lequel
R¹ et R² représentent un radical répondant à la formule (XIX) 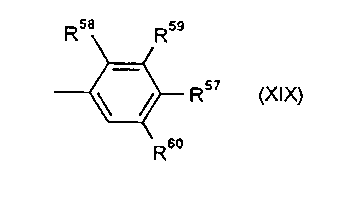 et
R³ représente un radical répondant à la formule (XX) 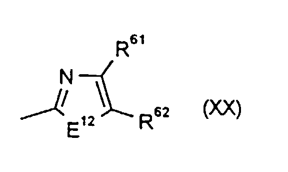
dans lesquelles
R⁵⁷, R⁵⁹ et R⁶⁰ représentent, indépendamment l'un de l'autre, un atome d'hydrogène, un groupe méthyle, un groupe éthyle, un groupe méthoxy, un groupe éthoxy, un groupe cyano, un groupe nitro, un groupe -N⁺(CH₃)₃ ou un groupe COOH, ou
R⁵⁷ et R⁵⁹ forment ensemble un pont -O-CH₂-O-,
R⁵⁸ représente un atome d'hydrogène, un groupe méthyle, un groupe méthoxy ou un atome de chlore,
R⁶¹ représente un groupe méthyle, un groupe difluorométhyle, un groupe trifluorométhyle, un groupe méthoxycarbonyle, un groupe éthoxycarbonyle ou un groupe phényle,
R⁶² représente un atome d'hydrogène, un groupe méthyle, un groupe éthyle, un groupe phényle ou un atome de chlore, ou bien
R⁶¹ et R⁶² forment ensemble un pont -CH=CH-CH=CH-ou un pont -CH=CH-C(OCH₃)=CH-,
E¹² représente un atome de soufre,
X⁻ représente un anion incolore inerte vis-à-vis d'un système redox dans les conditions données,
et la substance RED₁ représente un composé choisi parmi la série des formules (VIII), (X), (XI), (XIV) et (XV) selon la revendication 6 dans lesquelles
R²⁵ à R²⁸, R³¹, R³², R³⁵, R³⁶, R⁴³ et R⁵⁶ représentent un groupe méthyle, un groupe éthyle, un groupe propyle, un groupe butyle, un groupe pentyle, un groupe hexyle ou un groupe benzyle, R²⁵ à R²⁸, R³¹ et R³², de même que R³⁵ et R³⁶ étant respectivement identiques, et R⁴³ représente en outre un atome d'hydrogène,
R²⁹ et R⁴⁴ représentent un atome d'hydrogène, R⁴⁵ représente un atome d'hydrogène, un groupe méthoxy, un groupe éthoxy, un groupe diméthylamino, un groupe diéthylamino, un groupe anilino, un groupe N-méthylanilino ou un groupe pipéridino,
R³³ et R³⁴ sont identiques et représentent un atome d'hydrogène, un groupe méthyle, un groupe méthoxy, un atome de chlore, un groupe cyano ou un groupe méthoxycarbonyle,
E³ à E⁵ représentent un atome d'oxygène, un atome de soufre ou un groupe NR⁵⁶, E³ et E⁴ étant néanmoins identiques,
R³⁷ et R³⁸ sont identiques et représentent un atome d'hydrogène, un groupe méthyle, un groupe éthyle, un groupe propyle, un groupe butyle ou un groupe phényle,
Z¹ représente une liaison directe ou un groupe -CH=CH-,
R⁴⁶ à R⁴⁹ sont identiques et représentent un atome d'hydrogène, un groupe méthyle, un groupe méthoxy, un atome de chlore, un groupe cyano, un groupe méthoxycarbonyle, un groupe éthoxycarbonyle ou un groupe phényle,
E⁶ à E⁹ sont identiques et représentent un atome de soufre, un atome de sélénium ou un groupe NR⁵⁶,
_{=Z}2₌ représente une liaison double directe, un pont =CH-CH= ou un pont =N-N=,
R⁶⁵ et R⁶⁶, de même que R⁷¹ et R⁷², représentent un pont -(CH₂)₃- ou un pont -(CH₂)₄-,
R⁶⁷ à R⁷⁰ représentent un atome d'hydrogène, et
u représente un nombre entier de 1 à 6.

9. Système électrochrome selon les revendications 1 à 8, caractérisé en ce qu'il contient une paire de substances oxydable et réductible RED₁/OX₂, RED₁ et OX₂ étant reliées l'une à l'autre via un pont B, OX₂ représentant un composé répondant aux formules (I) à (IV) selon la revendication 4 et RED₁ répondant à une des formules (VIII) à (XVIII) selon la revendication 6, dans lequel
B représente un pont répondant aux formules -(CH₂)ₙ- ou -[Y¹ₛ-(CH₂)ₘ-Y²]ₒ-(CH₂)ₚ-Y³_{q}-, qui peut porter un ou plusieurs substituants identiques ou différents alkyle en C₁-C₄, alcoxy en C₁-C₄, halogéno ou phényle,
Y¹ à Y³ représentent, indépendamment l'un de l'autre, un atome d'oxygène, un atome de soufre, un groupe NR⁶³, un groupe COO, un groupe CONH, un groupe NHCONH, un groupe cyclopentanediyle, un groupe cyclohexanediyle, un groupe phénylène ou un groupe naphtylène,
R⁶³ représente un groupe alkyle en C₁-C₆, un groupe alcényle en C₂-C₆, un groupe cycloalkyle en C₄-C₇, un groupe aralkyle en C₇-C₁₅, un groupe aryle en C₆-C₁₀,
n représente un nombre entier de 1 à 12,
m et p représentent, indépendamment l'un de l'autre, un nombre entier de 0 à 8,
o représente un nombre entier de 0 à 6,
q et s représentent, indépendamment l'un de l'autre, 0 ou 1,
R¹⁹, R²¹ à R²⁵, R³¹, R³⁵, R³⁹, R⁴¹, R⁴³, R⁴⁶, R⁵⁰, R⁵⁴, R⁵⁶, R⁵⁷, R⁵⁹, R⁶¹, R⁶², R⁶⁴, R⁶⁵ ou R⁶⁶ forment une liaison directe au pont B ou bien R⁴⁶, R⁵⁷ ou R⁵⁹ forment un pont -COO- au pont B.

10. Liquide électrochrome contenant un système électrochrome selon au moins une des revendications 1 à 9 et au moins un solvant inerte.

11. Dispositif électrochrome contenant un liquide électrochrome selon la revendication 10.

12. Dispositif électrochrome selon la revendication 11, caractérisé en ce qu'il est réalisé sous la forme d'une cellule telle que par exemple une cellule solaire, sous la forme d'une vitre, d'un miroir, d'un toit pare-soleil ou d'un affichage.

13. Composé électrochrome selon les revendications 11 et 12, caractérisé en ce qu'il est constitué par deux plaques transparentes en verre ou en matière synthétique tournées l'une vers l'autre, dont une le cas échéant a été rendue réfléchissante et dont les côtés tournés l'un vers l'autre ont été munis d'une couche électroconductrice entre lesquelles est disposé le liquide électrochrome.
